Europäisches Patentamt

(19) European Patent Office

Office européen des brevets

(11) Numéro de publication : **0 205 523 B1**

(12) **FASCICULE DE BREVET EUROPEEN**

(45) Date de publication du fascicule du brevet :
03.07.91 Bulletin 91/27

(21) Numéro de dépôt : 86900172.7

(22) Date de dépôt : 30.12.85

(86) Numéro de dépôt international :
PCT/FR85/00378

(87) Numéro de publication internationale :
WO 86/04167 17.07.86 Gazette 86/17

(51) Int. Cl.⁵ : **G06F 12/02, G06F 7/00**

(54) **DISPOSITIFS D'ACTIVATION SIMULTANEE DE TRAINS DE COMMANDES ET APPLICATIONS AUX MEMOIRES.**

(30) Priorité : 31.12.84 FR 8420185

(43) Date de publication de la demande :
30.12.86 Bulletin 86/52

(45) Mention de la délivrance du brevet :
03.07.91 Bulletin 91/27

(84) Etats contractants désignés :
AT BE CH DE FR GB IT LI LU NL SE

(56) Documents cités :
GB-A- 2 092 785
GB-A- 2 123 998
US-A- 3 996 559
IEEE Transactions on Computers, vol. C32,
No. 12, December 1983, New York, (US), L.N.
Bhuyan et al.:"Design and performance of
generalised interconnection networks",
pages 1081-1090, see pages 1082-1083, part II

(73) Titulaire : LEHMANN, Jean-Philippe
28, rue des Pecheurs
F-13007 Marseille (FR)
Titulaire : ISOARDI, Patrick
7, rue du Maréchal Leclerc
F-67640 Fegersheim (FR)

(72) Inventeur : LEHMANN, Jean-Philippe
28, rue des Pecheurs
F-13007 Marseille (FR)
Inventeur : ISOARDI, Patrick
7, rue du Maréchal Leclerc
F-67640 Fegersheim (FR)

(74) Mandataire : Levesque, Denys et al
Cabinet Beau de Loménie 55, rue
d'Amsterdam
F-75008 Paris (FR)

EP 0 205 523 B1

## Description

### INDICATION DE L'ETAT DE LA TECHNIQUE ANTERIEURE

Actuellement, dans les techniques de l'informatique, les structures de mémoires se présentent, en dernière analyse, comme des ensembles d'emplacements, adressables individuellement, tous disjoints les uns des autres. Il peut se faire que dans plusieurs situations, l'utilisateur ne soit pas conscient de ce cloisonnement, mais au niveau interne le plus fin, cette contrainte demeure ; diverses techniques sont mises en oeuvre pour la contourner, à la fois hard et soft, et même en combinant les deux ; s'affranchir du cloisonnement consiste en fait à pouvoir "glisser" dans l'espace mémoire, en pouvant accéder à des emplacements qui se chevauchent, et à ne pas être obligé d'opérer sur un espace segmenté en faisant des sauts d'un segment à l'autre ; pour pallier ces inconvénients, au plus haut niveau on a la ressource des langages évolués ; au niveau machine, on peut par le jeu d'une seule instruction du processeur, accéder à une donnée, à cheval sur deux segments mémoire, mais c'est alors en fait, le microprogramme qui se charge d'opérer les accès mémoire nécessaires; enfin, il est possible de recourir à des techniques hard-soft, qui partant des mémoires telles qu'elles sont structurées, leur associent des dispositifs annexes d'analyse et de calcul d'adresses, qui doivent être traversés avant l'accès mémoire proprement dit (voir le document US-A-3 996 559) ; dans chacun de ces cas on parle de façon inexacte de simultanéité ou d'instantanéité : en fait on n'est jamais dans une situation où le parallélisme des commandes activant plusieurs cellules mémoires élémentaires, est maximal, comme lors d'un accès à un segment physique de mémoire. On étendra ici, tous les concepts exposés dans le document FR-A-2 569 289 publié le 21.02.1986.

### EXPOSE DE L'INVENTION

1) Le problème de la génération des commandes.

Il s'agit de définir une nouvelle structure de mémoire, qui soit accessible par une fenêtre de dimensions fixées, en n'importe quel emplacement de la mémoire, dans des conditions de rapidité maximales. On ne vise pas ici à utiliser des boîtiers mémoire existants, mais à en concevoir de nouveaux. Pour ce faire, on sera amené à définir des procédés et dispositifs particuliers de génération de trains de commandes simultanées, pour lesquels on peut envisager d'autres applications que celles exposées pour les mémoires. On présentera donc ces procédés et dispositifs de façon autonome ; d'autre part, si le cadre technique de l'invention est celui du hardware, on entendra ce terme dans son sens le plus large, sans se limiter a priori à telle ou telle technologie; l'essentiel, pour mettre en oeuvre les procédés et dispositifs décrits, sera de disposer des éléments fonctionnels courants de la logique binaire, qui peuvent être réalisés dans toutes sortes de technologies : ainsi on utilisera des canaux de transmission de l'information, binaires, unidirectionnels ou bidirectionnels selon le cas, des dispositifs booléens classiques, portes AND, OR, etc .., et des moyens fonctionnels agissant sur les canaux de transmission de l'information, comme des robinets qu'on peut ouvrir ou fermer, du type buffer 3 états.

Pour l'exposé qui suit, on précise ci-après la terminologie utilisée :

Un bus est un ensemble de canaux binaires ; l'état d'un canal est noté 0 ou 1 ; (si c'est nécessaire on précisera qu'on est dans un 3ème état ; sauf mention contraire il n'en sera pas question). L'état d'un bus à l'instant t est défini par l'ensemble des états, à cet instant t, de chacun des canaux binaires qui le constituent.

Un bus étant donné, on appelle E(B) l'ensemble des états possibles sur ce bus.

On appelle condition relative à un bus B, tout sous-ensemble X de E(B) ; on dit qu'une condition est vraie ou réalisée sur B, à l'instant t, et on note ce fait $X = 1$ ou $X(t) = 1$, lorsque l'état de B à l'instant t est un des éléments de X ; on dit qu'un groupe de conditions est exclusif si ces conditions sont des sous-ensembles de E(B) disjoints deux à deux.

Etant données n conditions $X_1$, $X_2$, ..., $X_n$ on appelle $X_1$ OU ... OU $X_n$ la condition formée par la réunion de $X_1$, $X_2$, .., $X_n$ et on appelle $X_1$ et $X_2$ ... ET $X_n$ la condition formée par l'intersection de ces conditions, et NON(X) le complémentaire de X, ou $\overline{X}$.

Dans ce qui suit on va présenter des procédés, qui permettent de construire à partir de certains dispositifs, de nouveaux dispositifs ; certains de ces procédés ont la caractéristique d'être récursifs : les dispositifs obtenus grâce à ces procédés peuvent à leur tour être utilisés par ces procédés pour construire de nouveaux dispositifs, et ainsi de suite ; en d'autres termes, muni de certains dispositifs, réalisant des fonctions qui sont décrites plus loin, on peut grâce aux procédés exposés, construire de nouveaux dispositifs, remplissant certaines fonctions décrites plus loin, ceux-ci pouvant alors éventuellement jouer le rôle des premiers cités plus haut.

La logique de tels procédés récursifs impose, pour qu'ils aient une valeur pratique de montrer qu'il existe, et qu'on peut toujours construire, des dispositifs initiaux, de façon que les procédés décrits trouvent à s'appliquer sur des dispositifs existants. On commencera donc par exposer 2 problèmes voisins, pour lesquels on montrera qu'il existe toujours, et qu'on peut les construire, des dispositifs fonctionnels satisfaisant à ces 2 problèmes (notés $P_1$ et $P'_1$) ; dans la partie réservée aux modes de réalisation, on présentera des cas particuliers de tels dispositifs fonctionnels. Une foie assurés de l'existence de dispositifs satisfaisant $P_1$ et $P'_1$ on exposera des procécés annoncés qui utilisent ces dispositifs, tout comme on le fait habituellement en décrivant par exemple un câblage, pour lequel on a besoin d'éléments fonctionnels, tels que décodeurs, encodeurs, etc ...., ou même des éléments plus complexes, du moment qu'on est assuré de leur existence ou de leur faisabilité ; dans la partie réservée aux modes de réalisation, on présentera des dispositifs obtenus par l'application des procédés décrits.

Posons maintenant les problèmes $P_1$ et $P'_1$.

$$P_1 \quad
\begin{aligned}
&\text{B un bus unidirectionnel. Sur B un groupe de conditions}\\
&\text{exclusif, en nombre N (+1 éventuelle), ainsi notées:}\\
&\text{A(éventuel),} C_0, C_1, \ldots, C_{N-1}. \text{ Soit h un entier vérifiant}\\
&4 \leq 2h < N \text{ (e). Soit N commandes binaires } S_0, S_1, \ldots, S_{N-1}.\\
&\text{Il faut activer ces commandes selon ces spécifications:}\\
&\quad \text{Ssi A=1 alors } S_i = 0 \;\; \forall i \in [0, N-1] \text{ (éventuel)}\\
&\quad (\text{Ssi } C_i = 1 \text{ alors } S_{(i+u)(N)} = 1 \;\; \forall u \in [0, h-1]) \;\; \forall i \in [0, N-1]
\end{aligned}$$

La notation "Ssi" signifie "si et seulement si", et $(i + u)(N)$ signifie $(i + u)$ modulo N. Tout dispositif répondant aux spécifications précédentes sera appelé circulaire h-glissant sur N, noté DChNa, DChN, ou DChN(a) selon que A est imposée ou non ou indifférente. Le problème $P'_1$ est une variant du précédent ; les dispositifs qui lui correspondront seront appelés h-glissant sur N avec report et notés DRhNa, DRhN ou DRhN(a) comme ci-dessus.

$$P'_1 \quad
\begin{aligned}
&\text{B un bus unidirectionnel. Sur B un groupe de conditions}\\
&\text{exclusif, en nombre N+h-1(+1 éventuelle), notées:}\\
&\text{A(éventuel), } R^-_{N-h+i} \;(i \in [1, h-1]), \; C_i \;(i \in [0, N-1]).\\
&\text{h vérifie la condition (e) signalée dans } p_1. \text{ On a}\\
&\text{N+1 commandes binaires } S_0, \ldots, S_{N-1}, R^+, \text{ qu'il faut acti-}\\
&\text{ver selon les spécifications suivantes:}\\
&\quad - \text{ Ssi A=1 alors } S_i = 0 \;\; \forall i \in [0, N-1] \text{ (éventuel)}\\
&\quad - (\text{Ssi } R^-_{N-h+i} = 1 \text{ alors } S_u = 1 \;\forall u \in [0, i-1]) \;\forall i \in [1, h-1]\\
&\quad - (\text{Ssi } C_i = 1 \text{ alors } S_{i+u} = 1 \;\forall u \in [0, h-1]) \;\forall i \in [0, N-h]\\
&\quad - (\text{Ssi } C_{N-h+i} = 1 \text{ alors } S_{N-h+i+u} = 1 \;\forall u \in [0, h-i-1]\\
&\qquad \text{et aussi } R^+ = 1) \;\forall i \in [1, h-1]
\end{aligned}$$

Il existe bien des dispositifs remplissant les fonctions exigées pour la solution de $P_1$ et $P'_1$, et ceci quel que soit le groupe de conditions exclusif qui sera défini sur le bus ; en effet quiconque est familiarisé avec les techniques de l'algèbre de Boole remarquera, qu'il est par exemple possible d'appliquer ici le théorème de décomposition canonique d'une expression logique quelconque, fonction de variables booléennes, en somme logique de produits logiques de ces variables ou de leurs négations. Ceci suffit à établir que pour un groupe de conditions exclusif donné, il est toujours possible de réaliser un câblage dont les sorties $S_0, \ldots, S_{N-1}, R^+$, fonctions de ces conditions, prennent les valeurs 0 ou 1, selon les spécifications de $P_1$ ou $P'_1$. Bien entendu, dans chaque cas particulier, il n'y a aucune raison que le câblage effectivement mis en oeuvre, corresponde à celui qui est sous-jacent au théorème évoqué ci-dessus ; on cherchera plutôt à tirer le meilleur parti de la façon dont le groupe de conditions exclusif est défini sur le bus. En décrivant cette invention, dans les modes de réalisation, on proposera, pour certains groupes de conditions exclusifs, des dispositifs appropriés à la solution de $P_1$ et

$P'_1$. On va maintenant utiliser des dispositifs du type DChN(a) et DRhN(a) ((a) signifie qu'il pourra y avoir A ou non), pour la solution de 4 problèmes, notés $P_1$, $P'_1$, $P_2$, $P'_2$ qu'on expose ci-après. Là encore il faut préciser la terminologie qui sera utilisée : un groupe de conditions exclusif est noté G(K, L, h) lorsqu'on est dans la situation suivante : sur un bus B, les conditions sont au nombre de K · L + 1, l'une notée A, les autres $C_{ij}$ (i ∈ [0, L − 1] j ∈ [0, K − 1]) présentant la particularité que la réalisation de chacune d'entre elles, implique les réalisations simultanées d'une conditions $CL_i$ sur une partie $B_L$ de B, et d'une conditions $CK_j$ sur une partie $B_K$ de B, $B_L$ et $B_K$ étant deux parties du bus totalement disjointes et les L conditions $CL_i$ formant un groupe exclusif sur $B_L$, et les K conditions $CK_j$ formant sur $B_K$ un groupe exclusif. h est un nombre tel que 4 ≦ 2h ≦ K. Un groupe de conditions exclusif est noté G(K, L, h, R) lorsqu'on est dans la situation suivante : sur B les conditions sont au nombre de K · L + h, l'une notée A, les h − 1 suivantes

$$R^-_{K-h+i} \quad \text{pour} \quad i \in [1, h-1],$$

les KL suivantes notées $C_{ij}$ (i ∈ [0, L − 1] j ∈ [0, K − 1]) et présentant les mêmes caractéristiques que ci-dessus pour le groupe G(K, L, h). h vérifie 4 ≦ 2h ≦ K.

Posons le problème $P_1$

Soit un bus B, sur lequel est défini un groupe de conditions G(K, L, h). Soient K · L commandes binaires, notées $S_{ij}$ i ∈ [0, L − 1] j ∈ [0, K − 1]. Il faut réaliser un câblage permettant l'activation de ces commandes selon les spécifications suivantes :

$$(i_1) \quad - \text{Ssi } A=1 \text{ alors } S_{ij}=0 \quad \forall i \in [0,L-1] \; \forall j \in [0,K-1] \; (\text{éventuel})$$
$$(i_3) \quad -(\text{Ssi } C_{ij}=1 \text{ alors } S_{i,j+u}=1 \quad \forall u \in [0,h-1] \,) \forall i \in [0,L-1]$$
$$\forall j \in [0,K-h]$$
$$(i_4) \quad -(\text{Ssi } C_{ij}=1 \text{ alors } S_{i,j+u}=1 \quad \forall u \in [0,K-1-j]$$
$$\text{et } S_{i+1,u}=1 \quad \forall u \in [0,h-K+j-1] \,) \; \forall i \in [0,L-2]$$
$$\forall j \in [K-h+1,K-1]$$
$$(i_5) \quad -(\text{Ssi } C_{L-1,j}=1 \text{ alors } S_{L-1,j+u}=1 \; \forall u \in [0,K-1-j]$$
$$\text{et } S_{0,u}=1 \quad \forall u \in [0,h-K+j-1] \,) \forall j \in [K-h+1,K-1]$$

Posons le problème $P'_1$

Soit un bus B, et des conditions du type G(K, L, h, R). Soit K · L + 1 commandes binaires, notées $R^+$ et $S_{ij}$ comme ci-dessus. Il faut réaliser un câblage permettant l'activation des $S_{ij}$ et $R^+$ selon les spécifications :

$$(i_1),(i_3),(i_4) \text{ comme ci-dessus.}$$
$$(i_2) \quad -(\text{Ssi } R^-_{K-h+i}=1 \text{ alors } S_{0,u}=1 \; \forall u \in [0,i-1] \,) \; \forall i \in [1,h-1]$$
$$(i'_5) \quad - \text{définie par } (i_5) \text{ où les conditions d'activation des}$$
$$S_{0,u} \text{ sont supprimées et remplacées par } R^+=1.$$

Outre ces deux problèmes, l'utilisation de dispositifs du type DChN(a) et DRhN(a) permet de résoudre très aisément deux autres problèmes qu'on expose maintenant :

4

Problème $P_2'$.

$B_K$ un bus unidirectionnel. Sur $B_K$ est défini un groupe de conditions exclusif en nombre $K + h - 1$ (+ 1 éventuelle), notées A (éventuel),

$$\bar{R}_{K-h+j}\ (j \in [1, h-1]), CK_j\ (j \in [0, K-1]).$$

On a un bus $B_L$, similaire, avec A' (éventuel), $\bar{R}_{L-h'+i}$ (i $\in$ [1, h' − 1]), $CL_i$ (i $\in$ [0, L − 1]). On a $K \cdot L + 2$ commandes $S_{i,j}$, $R_K$, $R_L$. Les conditions d'activation doivent être, (4 $\leq 2h \leq K$ et 4 $\leq 2h' \leq L$) :

$$
\begin{aligned}
&-\left(\begin{array}{l} \text{Ssi } \bar{R}_{L-h'+i}=1 \qquad\qquad \forall u \in [0,i-1] \quad \forall i \in [1,h'-1] \\ \text{et } \bar{R}_{K-h+j}=1 \quad \text{alors } S_{u,v}=1\ \forall v \in [0,j-1] \text{ et} \forall j \in [1,h-1] \end{array}\right) \\
&-\left(\begin{array}{l} \text{SsiCK}_j=1 \qquad\qquad\qquad \forall u \in [0,i-1] \quad \forall\ i \in [1,h'-1] \\ \text{et } \bar{R}_{L-h'+i}=1 \quad \text{alors } S_{u,j+v}=1\ \forall v \in [0,\alpha]\ \text{ et} \forall j \in [0,K-1] \\ \text{avec } \alpha = Min(h-1,K-1-j) \text{ et } R_K^+=1 \text{ Ssi } \alpha =K-1-j \end{array}\right) \\
&-\left(\begin{array}{l} \text{SsiCL}_i=1 \qquad\qquad\qquad \forall u \in [0,\beta] \quad \forall i \in [0,L-1] \\ \text{et } \bar{R}_{K-h+j}=1 \quad \text{alors } S_{i+u,v}=1\ \forall v \in [0,j-1] \text{ et} \forall j \in [1,h-1] \\ \text{avec } \beta = Min(h'-1,L-1-i) \text{ et } R_L^+=1 \text{ Ssi } \beta =L-1-i \end{array}\right) \\
&-\left(\begin{array}{l} \text{SsiCL}_i=1 \qquad\qquad \forall u \in [0,\beta]\ \forall i \in [0,L-1] \\ \text{etCK}_j=1 \quad \text{alors } S_{i+u,j+v}=1\ \forall v \in [0,\alpha]\ \forall j \in [0,K-1] \\ \text{avec et comme ci-dessus, et } R_K^+ \text{ et } R_L^+ \text{ activées comme} \\ \text{ci-dessus.} \end{array}\right) \\
&-\left(\text{Ssi A ou A'=1 alors toutes les commandes=0 (éventuel )}\right)
\end{aligned}
$$

Problème $P_2$.

Sur un bus est défini un groupe de conditions du type $G(K, L, h)$. Soit h' tel que 4 $\leq 2h' \leq L$. On a un ensemble de $K \cdot L$ commandes qu'il faut activer ainsi :

$$
\begin{aligned}
&-\left(\text{Ssi A=1 alors toutes les commandes = 0 (éventuel )}\right) \\
&-\left(\begin{array}{l} \text{Ssi } C_{ij}=1 \text{ alors } S_{(i+u)(L),(j+v)(K)}=1 \\ \forall\ u \in [0,h'-1]\ \forall v \in [0,h-1] \end{array}\right) \quad \begin{array}{l} \forall i \in [0,L-1] \\ \forall j \in [0,K-1] \end{array}
\end{aligned}
$$

(i + u)(L) signifie (i + u) modulo L ; de même pour (j + v)(K).

Ces deux problèmes s'interprètent dans le cadre suivant : $K \cdot L$ commandes sont disposées dans un champ bidimensionnel (K × L) ; il s'agit d'activer les commandes de ce champ repérés grâce à une fenêtre de dimensions h × h' ; dans $P_2'$ on tient compte de débordements éventuels, lignes ou colonnes ou les deux, dans $P_2$ le champ est bouclé sur lui-même tel un tore.

2) La solution : on commencera par $P_1$ et $P_1'$.

Pour la solution de ces problèmes, on utilisera au préalable, une image intuitive, pour mieux faire comprendre les procédés mis en oeuvre. Considérons le dessin 1 : on imagine que les commandes à activer, sont disposées dans l'espace sur L plans superposés, et de façon circulaire dans chaque plan ainsi : les plans sont notés $N_0, N_1, ..., N_{L-1}$ ; sur le 1er cercle, dans le plan $N_0$, sont disposées les commandes $S_{0,0}\ S_{0,1} ... S_{0,K-1}$. Sur le second cercle, dans le plan $N_1$, sont disposées les commandes $S_{1,0}\ S_{1,1} ... S_{1,K-1}$ et ainsi de suite. On relie alors tous ces points dans l'espace par une ligne dans l'ordre que voici : $S_{0,0}$ $S_{0,1}$ ... $S_{0,K-1}$ (tous dans le plan $N_0$) puis on passe de $S_{0,K-1}$ à $S_{1,0}$ dans le plan supérieur $N_1$ et ainsi de suite. On enfile alors un manchon de longueur h à l'extrémité inférieure de la ligne et on le fait coulisser le long de celle-ci ; la position du manchon est repérée par son origine inférieure, et les commandes qui doivent être activées sont celles recouvertes par le manchon. Les procédés qu'on va exposer exploitent l'idée suivante : les génératrices du cylindre du dessin 1, au nombre de K, notées $S_0$, .., $S_{K-1}$ permettent chacune de spécifier les positions suivantes : pour $S_j$, les points $S_{i,j}$ (pour i $\in$ [0, L – 1]). Les $S_j$ forment un ensemble de commandes activées grâce à un dispositif du type DChK(a). Pour la position j sur le cercle de base sont alors spécifiées les génératrices correspondantes; on voit alors qu'il est nécessaire de préciser en outre quels sont les plans actifs ; lorsque le manchon est tout entier dans un plan $N_i$, il suffit d'activer le plan $N_i$, mais une question se pose lorsque le manchon se trouve pour partie dans un plan, et pour partie dans le plan immédiatement supérieur ; l'idée consiste alors à diviser chacun des plans $N_i$ en deux ensembles (cf dessin 2) de commandes ainsi : $(S_{i,0}$ $S_{i,1}$ ... $S_{i,d})$ $(S_{i,d+1}$ $S_{i,d+2}$ ... $S_{i,K-1})$. On note le 1er ensemble $S_i'$ le second $S_i''$ et on dispose les points $S_{i,j}$ dans l'espace comme précédemment, sauf qu'on a maintenant, non pas L plans superposés mais 2L plans : dans le 1er on place les points de $S_0'$, dans le second ceux de $S_0''$, dans le 3ème ceux de $S_1'$, dans le 4ème ceux de $S_1''$ et ainsi de suite. Les conditions d'activation de ces doublets de plans qu'on représente sur le dessin 2 seront : pour un i fixé, si la position du manchon est j, soit j $\in$ $S_i'$ et dans ce cas on activera $S_i'$ et $S_i''$, soit j $\in$ $S_i''$ et dans ce cas on activera.

$$S_i'' \quad et \quad S_{i+1}' \quad .$$

Il reste à préciser selon quel critère opérer cette division dans les commandes d'un même plan ; les dessins 1 et 2 montrent que lorsque le manchon est à cheval sur 2 plans, il faut prévoir pour lui un débordement possible jusqu'à h – 1, cette situation devant être envisagée aussi bien pour des passages de plans de type S' à S'', que pour des passages de plans de type S'' à S'. Il faudra donc opérer des coupures où le choix de d se fait dans l'espace [h – 2, K – h].

Ceci étant fait, il suffira de définir alors sur les 2L plans $S_i'$ et $S_i''$ (i $\in$ [0, L – 1]), des conditions d'activation fonctions uniquement de la valeur i et de la valeur j, selon que cette dernière appartient ou non à l'espace [0, d] ; un dispositif de type DR2L'(a) (L' = 2L) ou un dispositif de type DC2L'(a), selon qu'on veut boucler l'espace des commandes sur lui-même ou pas, remplira la fonction souhaitée. Il suffira alors de câbler en ET logique les commandes des génératrices Sj avec les commandes des plans $S_i'$ et $S_i''$ :

$S_i' \cdot S_j$ $\forall$ i $\in$ [0, L – 1] $\forall$ j $\in$ [0, d]

$S_i'' \cdot S_j$ $\forall$ i $\in$ [0, L – 1] $\forall$ j $\in$ [d + 1, K + 1].

Le procédé Pro 1 pour $P_1$.

Soit le problème $P_1$ tel qu'exposé plus haut, avec les notations définies. ((X) signifie X éventuelle.)

– Soient les conditions : $CK_0$ ET $(\overline{A})$, $CK_1$ ET $(\overline{A})$, ........... $CK_{K-1}$ ET $(\overline{A})$, (A). Ce groupe est exclusif ; on peut donc lui associer un dispositif selon $P_1$, DChK(a), ayant K commandes $S_0$, .., $S_{K-1}$ activées selon $P_1$.

– En second lieu on choisit un nombre d quelconque d $\in$ [h – 2, K – h]

– Soit alors la condition D' = $CK_0$ OU $CK_1$ OU ... OU $CK_d$ et D'' = $CK_{d+1}$ OU ... OU $CK_{K-1}$. On forme alors le groupe de conditions : $CL_0$ et D' ET $(\overline{A})$, $CL_0$ et D'' et $(\overline{A})$, ............. $CL_{L-1}$ ET D' ET $(\overline{A})$, $CL_{L-1}$ ET D'' ET $(\overline{A})$, (A). Ce groupe est exclusif ; on peut donc lui assurer selon $P_1$ un dispositif DC2L'(a), (L' = 2L) à 2L commandes

$$S_0', S_0'', S_1', S_1'', \ldots, S_{L-1}', S_{L-1}''$$

activées selon $P_1$ avec h = 2 et les présentes conditions.

– On câble alors en ET logique ces deux groupes de commandes, en en formant K · L ainsi :

$S_{i,j} = S_i' \cdot S_j$ $\forall$ i $\in$ [0, L – 1] $\forall$ j $\in$ [0, d]

$S_{i,j} = S_i'' \cdot S_j$ $\forall$ i $\in$ [0, L – 1] $\forall$ j $\in$ [d + 1, K – 1]

Le procédé Pro' 1 pour $P'_1$.

Soit le problème $P'_1$ tel qu'exposé plus haut, avec les notations définies.
— Soient les conditions :

$$CK_0 \ ET(\overline{A}), \ldots \ldots \ldots, CK_{K-h} \ ET(\overline{A}),$$
$$(CK_{K-h+1} ET(\overline{A}))OU \ R^-_{K-h+1}, \ldots \ldots, (CK_{K-1} ET(\overline{A})) \ OU \ R^-_{K-1}, \cdot (A) \ .$$

Ce groupe est exclusif ; on est dans le cadre de $P_1$ ; il existe donc un dispositif DchK(a), à K commandes $S_0, .., S_{K-1}$ répondant aux spécifications de $P_1$.
— En second lieu on choisit un nombre quelconque d, $d \in [h - 2, K - h]$
— Soient alors D' et D", D' = $CK_0$ OU ... OU $CK_d$, D" = $CK_{d+1}$ OU .... OU $CK_{K-1}$. Soit

$$R^- = R^-_{K-h+1} \ OU \ R^-_{K-h+2} \ OU \ \ldots \ OU \ R^-_{K-1} .$$

Soit le groupe exclusif : $CL_0$ ET D' ET $(\overline{A})$, $CL_0$ ET D" ET $(\overline{A})$, ..............., $CL_{L-1}$ ET D' ET $(\overline{A})$, $CL_{L-1}$ ET D" ET $(\overline{A})$, R-, (A).
On est alors dans le cadre de $p'_1$ ; il existe donc un dispositif DR2L'(a), (L' = 2L), à 2L + 1 commandes

$$S'_0, S''_0, S'_1, S''_1, \ldots \ldots S'_{L-1}, S''_{L-1},$$

et $R^+$ répondant aux spécifications du problème $P'_1$.
— On câble alors en ET logique ces deux groupes de commandes,

$$en \ en \ formant \ KL+1 \ ainsi: \ S_{i,j} = S'_i . S_j \quad \forall i \in [0, L-1] \ \forall j \in [0, d]$$
$$et \ R^+ \quad\quad S_{i,j} = S''_i . S_j \quad \forall i \in [0, L-1] \ \forall j \in [d+1, K-1]$$

Pro 1 et Pro' 1 définissent donc deux procédés de câblage pour les problèmes respectifs $P_1$ et $P'_1$ ; on mettra ceux-ci en oeuvre dans divers modes de réalisation qui sont exposés plus loin, en montrant comment, dans certains cas particuliers de définition des conditions $CL_i$ et $CK_j$, (cas particuliers très courants dans la pratique) les groupes de conditions décrits ci-dessus se matérialisent de manière extrêmement simple.
Par ailleurs on constate comme il a été annoncé que Pro 1 et Pro' 1 sont bien récursifs : en effet, les dispositifs obtenus grâce à Pro 1 sont caractérisés par la donnée d'un groupe de conditions exclusif, en nombre $K \cdot L$ (+ 1 éventuelle) : (A) et les $C_{ij}$ (chacune correspondant à une réalisation simultanée de $CL_i$ et de $CK_j$). Sont bien activées $K \cdot L$ commandes, les $S_{i,j}$, celles-ci étant rangées dans l'ordre suivant : $S_{0,0}$ ... $S_{0,K-1}$ $S_{1,0}$ ... $S_{1,K-1}$ .......... $S_{L-1,0}$ ... $S_{L-1,K-1}$. Au total le dispositif ainsi obtenu est du type DChN(a) avec N = $K \cdot L$ ; il peut donc, à son tour, être utilisé dans le cadre du procédé Pro 1, comme dispositif selon $P_1$. Les mêmes remarques valent pour le procédé Pro' 1 qui lui aussi est récursif au sens qu'on vient de préciser. Donnons maintenant les solutions de $P_2$ et $P'_2$.

Procédé Pro 2 pour $P'_2$.

Soit le problème $P'_2$ tel qu'exposé plus haut.
Il est clair que $B_K$ est dans la situation de type $p'_1$ ; on peut donc lui associer selon $p'_1$ un dispositif de type DRhK(a). $B_L$ est également dans une situation de type $p'_1$ et on peut donc lui associer un dispositif de type DRh'L(a). Pour le 1er dispositif on note les commandes $S_0, S_1, ..., S_{K-1}, R^+_K$, pour le second

$$S'_0, S'_1, \ldots, S'_{L-1}, R^\top_L .$$

Les $K \cdot L + 2$ commandes demandées pour la solution de $P'_2$, sont alors les suivants : $S_{i,j} = S'_i \cdot S_j \; \forall i \in [0, L-1] \; \forall j \in [0, K-1]$ ainsi que $R^+_K$ et $R^+_L$.

Procédé Pro 2 pour $P_2$.

Soit le problème $P_2$ tel qu'exposé plus haut.

On associe le groupe de conditions, (A) et les $CK_j$ à un dispositif de type DChK(a), auquel correspondent les K commandes $S_0, \ldots, S_{K-1}$. De même on associe le groupe de conditions, (A), et les $CL_i$ à un dispositif de type DCh'L(a) auquel correspondent les L commandes

$$S'_0, \ldots, S'_{L-1} .$$

Les $K \cdot L$ commandes demandées pour la solution de $P_2$ sont alors les suivantes : $S_{i,j} = S'_i \cdot S_j \; \forall i \in [0, L-1] \; \forall j = [0, K-1]$. (l'écriture $S'_i \cdot S_j$ indiquant un câblage en ET logique, comme ci-dessus.)

On notera que ces procédés peuvent aisément se généraliser à des champs de dimensions quelconques supérieures à 2.

3) Le problème de l'application aux mémoires.

Les procédés que l'on a décrit, vont être mis en oeuvre dans le cadre suivant : les mémoires pour être intégrées, demandent que les cellules élémentaires qui les constituent aient une disposition qui permette leur sélection par des techniques de type matriciel, ligne-colonne. Ici il s'agit d'opérer un glissement, de taille h dans l'ensemble de ces commandes de sélection, celles-ci ayant une configuration matricielle. D'autre part la façon dont les bus adresses matérialisent les groupes de conditions exclusifs, est tout à fait particulière, et on en tirera parti.

Précisons maintenant ces conditions particulières, en exposant 2 problèmes et 2 variantes de ceux-ci.

Le problème $P'_1(M)$.

Ce problème est un sous-problème de $P'_1$. Soit un réseau matriciel de $K \cdot L$ cellules mémoire élémentaires, notées $M_{i,j}$ ($i \in [0, L-1] \; j \in [0, K-1]$) ; notons $CS_{i,j}$ les commandes d'activation de chacune de ces cellules. Le réseau est atteint par un bus à $k + \ell + 2$ canaux binaires, notés

$$R^-, A_0, \ldots, A_{k-1}, A'_0, \ldots, A'_{\ell-1}, A^+ .$$

On a $K = 2^k$, $L = 2^\ell$, $h = 2^t$ ($4 \leqq 2h \leqq K$). $K \cdot L + h$ conditions sont définies sur le bus dont on identique quand elles sont validées :

– $A = 1$ correspond aux situations : $A^+ = 0$ et $R^- = 0$

$$-R^-_{K-h+j} = 1$$

correspond aux situations : $A^+ = 0$, $R^- = 1$ et $A_{k-1} .. A_0$ porte le code binaire de $K - h + h \cdot (j \in [1, h-1])$

– Chacune des $K \cdot L$ autres situations, $C_{i,j} = 1$ ($i \in [0, L-1] \; j \in [0, K-1]$) correspond à la situation : $A^+ = 1$, $R^- = 0$, $A_{k-1} \ldots A_0$ porte le code binaire de

$$j \text{ et } A'_{\ell-1} \cdots A'_0$$

porte le code de i.

Il faut alors activer les $CS_{I,J}$ et une commande $R^+$, selon les spécifications décrites dans $P'_1$ où on remplace les $S_{I,J}$ par les $CS_{I,J}$.

Le problème $P_1(M)$

C'est une variante du précédent, qui forme un sous-problème de $P_1$. Soit un réseau de $K \cdot L$ cellules mémoires élémentaires comme ci-dessus. Il est atteint par un bus à $k + \ell + 1$ canaux binaires,

$$A_0 \cdots A_{k-1} A'_0 \cdots A'_{\ell-1} A^+.$$

$K$, $L$, $h$ définis comme ci-dessus. On a $K \cdot L + 1$ conditions :
- $A = 1$ correspond à $A^+ = 0$
- $C_{IJ} = 1$ correspond à $A^+ = 1$, $A_{k-1} \ldots A_0$ porte le code de

$$j \text{ et } A'_{\ell-1} \cdots A'_0$$

celui de i.

Il faut alors activer les $CS_{I,J}$ selon les spécifications décrites dans $P_1$ où on remplace les $S_{I,J}$ par les $CS_{I,J}$.

Le problème $P'_2(M)$

C'est un sous-problème de $P'_2$. Soit un réseau de $K \cdot L$ cellules comme ci-dessus atteint par 2 bus. Sur l'un $k + 2$ canaux, $R^-_K$, $A_0$, .., $A_{k-1}$, $A^+$, sur l'autre $\ell + 2$ canaux

$$R^-_L, A'_0, \ldots, A'_{\ell-1}, A'^+.$$

$K = 2^k$, $L = 2^\ell$, $h = 2^t$, $h = 2^{t'}$. ($4 \leq 2h \leq K$ et $4 \leq 2h' \leq L$). En se référant aux notations de $P'_2$ on a :
$A \sim A' \cdot 1$ correspond à $((A'^+ = 0$ et $R^-_L = 0)$ ou $(A^+ = 0$ et $R^-_K = 0))$

$$- R^-_{K-h+j} = 1$$

correspond à : $A^+ = 0$, $R^-_K = 1$, $A_{k-1} \ldots A_0$ porte le code binaire de j.

$-R^-_{L-h'+i} = 1$ correspond à: $A'^+ = 0, R^-_L = 1, A'_{\ell-1} \ldots A'_0$ porte le code binaire de i.

$-CK_j = 1$ correspond à: $A^T = 1; R^-_K = 0, A_{k-1} \ldots A_0$ porte le code binaire de j.

$-CL_i = 1$ correspond à: $A'^+ = 1, R^-_L = 0, A'_{\ell-1} \ldots A'_0$ porte le code binaire de i.

Il faut alors activer les commandes de sélection des cellules de mémoire, et 2 commandes $R^+_K$, $R^+_L$, selon les spécifications décrites dans $P_2'$ où les $S_{i,j}$ représentent les commandes de sélection des cellules $M_{i,j}$.

Le problème $P_2(M)$

C'est une variante du précédent, qui forme un sous-problème de $P_2$. On a un réseau de $K \cdot L$ cellules comme ci-dessus ; sur un bus $k + 1$ canaux, $A^+$, $A_0$ ... $A_{k-1}$ sur l'autre $\ell + 1$ canaux,

$$A'^+, A_0' \ldots A_{\ell-1}'.$$

— $A = 1$ correspond à $A^+ = 0$ ou $A'^+ = 0$
— $C_{ij} = 1$ correspond à :

$$A^+ = 1, A'^+ = 1, A_0 \ldots A_{k-1} \text{ et } A_0' \ldots A_{\ell-1}'$$

portent les codes respectifs de $j$ et $i$.

Il faut alors activer les commandes des cellules de moire selon les spécifications décrites dans $P_2$, où les $S_{i,j}$ sont les commandes des cellules $M_{i,j}$.

Bien entendu ces problèmes étant des sous-problèmes de ceux qu'on a signalés, on sait déjà qu'ils seront résolus par l'application des procédés Pro 1, Pro' 1, Pro 2, Pro' 2 ; mais dans ces cas particuliers on présentera des dispositifs spécialement adaptés.

En outre il faut signaler qu'une nouvelle question se pose : lorsque h cellules consécutives sont activées ($P_1(M)$ et $P_1'(M)$) ou $h \cdot h'$ ($P_2(M)$ et $P_2'(M)$), qu'il s'agisse d'une opération de lecture ou d'écriture, il faudra bien que les données correspondantes transitent entre le système et l'extérieur, et donc qu'on indique comment le bus données sera raccordé aux cellules de mémoire.

On se place dans les cas $P_1(M)$ et $P_1'(M)$. Les cellules sont notées $M_{i,j}$ ($i \in [0, L-1]$ $j \in [0, K-1]$), le bus données est noté $D_0, D_1, ..., D_{h-1}$. Si on relie les cellules au bus ainsi : $M_{i,j}$ relié à $D_{h-1-v}$ ($v = (j$ modulo $h$)) c'est à dire comme pour une architecture classique, on voit que pour les accès dont la partie d'adresse relative à $A_{k-1} ... A_0$, est un multiplie de h, l'ordre des données sur le bus correspondra à celui naturellement défini dans le réseau, et qu'on peut symboliser ainsi :

$$M_{i,j} \leqslant M_{i',j'} \quad \text{équivalent à} \quad \left( \begin{array}{l} \text{soit} \quad i < i' \\ \text{soit} \quad i = i' \text{ et } j \leqslant j'. \end{array} \right)$$

Mais si la partie d'adresse $A_{k-1} ... A_0$ présente un reste dans la division par h, noté q, alors l'ordre des données sur le bus sera modifié. On peut représenter une adresse ainsi par un couple i, mh + q ; la position initiale correspondante se situe à la (i + 1)ème ligne, et à la (mh + q + 1)ème colonne du réseau matriciel ; on sait qu'on aura bien sélecté les h cellules à partir de $M_{i,j}$ dans l'ordre qu'on a défini ci-dessus. Mais il faudrait qu'on ait la disposition suivante sur le bus qu'on montre dans la partie gauche du tableau ci-dessous, alors qu'en fait c'est la disposition, montrée dans la partie droite qui se produit :

| | | | |
|---|---|---|---|
| $D_{h-1}$ | $M_{i,mh+q}$ | $D_{h-1}$ | $M_{i,(m+1)h}$ |
| $D_{h-2}$ | $M_{i,mh+q+1}$ | $D_{h-2}$ | $M_{i,(m+1)h+1}$ |
| . . . . | . . . . . . . . . | . . . . | . . . . . . . . . . . |
| | | $D_{h-q}$ | $M_{i,(m+1)h+q-1}$ |
| . . . . | . . . . . . . . . | $D_{h-q+1}$ | $M_{i,mh+q}$ |
| $D_q$ | $M_{i,mh+h-1}$ | . . . . | . . . . . . . . . . . |
| $D_{q-1}$ | $M_{i,(m+1)h}$ | . . . . | . . . . . . . . . . . |
| . . . . | . . . . . . . . . | . . . . | . . . . . . . . . . . |
| . . . . | . . . . . . . . . | . . . . | . . . . . . . . . . . |
| . . . . | . . . . . . . . . | . . . . | . . . . . . . . .. . |
| $D_0$ | $M_{i,(m+1)h+q-1}$ | $D_0$ | $M_{i,mh+h-1}$ |

Tableau I

On constate immédiatement que les dérangements opérés sur le bus sont les h permutations circulaires (dont l'identité), chacune associée à une valeur de q entre 0 et h − 1.

Il sera donc fait appel, dans la solution à des permutateurs.

Remarque 0 :

Dans le tableau I, n'ont pas été mentionnées des situations où les h cellules consécutives recouvrent la fin d'une ligne du réseau et le début de la ligne suivante. La raison en est que, h étant ici un diviseur de K, les situations en question ne se traduisent que par une variation de ligne, les adresses associées aux colonnes continuant de déterminer sur le bus données des permutations conformes à la description donnée plus haut ; il en est de même lorsqu'on est en situation de report, au début de la 1ère ligne du réseau, ou en situation de débordement, à la fin de la dernière ligne du réseau. La solution qu'on exposera plus loin, ne sera en rien limitée par ces conditions "au bord".

On se place maintenant dans les cas $P_2(M)$ et $P'_2(M)$. Le problème du dérangement des données se pose alors d'une façon plus complexe : Il faudra, d'une part, choisir un mode de liaison des cellules au bus données qui comportera dans ce cas, hh' canaux, d'autre part, en fonction du choix précédent, réarranger les données, selon l'adresse spécifiée.

4) La solution pour l'application aux mémoires.

En ce qui concerne l'activation des commandes des cellules de mémoire, on a déjà vu que tous les problèmes posés sont des sous-problèmes de ceux décrits et nommés $P_1$, $P'_1$, $P_2$, $P'_2$, pour lesquels on a donné des procédés les solutionant de manière générale, et qu'on particularisera dans la partie réservée aux modes de réalisation. On s'intéresse donc ici, uniquement à la question de la liaison des cellules au bus données et du réarrangement des données. Voyons $P_2(M)$ et $P'_2(M)$ : La façon dont les cellules sont connectées au bus données est ainsi choisie : $M_{i,j}$ lié à $D_{h'-1-u,h-1-v}$ avec u = (i modulo h') v = (j modulo h) ; le bus données comprend hh' canaux ainsi notés, avec u ∈ [0, h' − 1] et v ∈ [0, h − 1]. Ce choix présente l'avantage de considérablement simplifier le problème du réarrangement des données ; une adresse se présente en effet ainsi, (m'h' + q', mh + q), q' étant le reste présenté par l'adresse ligne dans la division par h', et q le reste de l'adresse colonne dans la division par h ; de ce fait, pour une adresse i, j donnée (on fait abstraction des débordements éventuels qui ne posent aucun problème), sont sélectionnées h' lignes, et dans chacune d'elles un groupe de h cellules qui ont la particularité de présenter, chacun, le même dérangement spécifié par la valeur q ; ce dérangement est exactement celui décrit dans le tableau I : on réalisera donc la même permutation circulaire sur les h' nappes du bus : $D_{u,0} D_{u,1} ... D_{u,h-1}$ (u ∈ [0, h' − 1]).

On considère alors les h nappes du bus : $D_{0,v} D_{1,v} ... D_{h'-1,v}$ ($v \in [0, h-1]$) ; sur chacune d'elles sont alors présentés les h' données convenables, chaque groupe de h' étant dérangé selon la même permutation circulaire, spécifiée par la valeur q' ; on se trouve alors dans une situation identique à celle décrite dans le tableau I, où les lettres i, m, h, q sont remplacées par les lettres i', m', h', q' : il suffira alors d'opérer la même permutation circulaire, spécifiée par q', pour les h nappes du bus précisées ci-dessus.

Soit Perm(h) un dispositif ayant h entrées e(0), .., e(h − 1), h sorties s(0) .. ; s(h − 1), h commandes qu'on note $q_0, .., q_{h-1}$, qui, pour l'activation de la commande $q_i$, réalisent la permutation :

$$e(h-i-1), e(h-i-2), \ldots, e(0), e(h-1), \ldots e(h-i)$$
$$s(h-1)., s(h-2), \ldots, s(i), s(i-1), \ldots, s(0) \qquad \downarrow$$

Ces dispositifs sont connus ; on peut les réaliser en n'utilisant que des buffers trois états comme dans le dessin 3 qui montre un exemple de câblage dans le cas h = 4.

Pour les problèmes $P_1(M)$ et $P'_1(M)$ on procédera donc ainsi : chaque cellule de mémoire $M_{i,j}$ est reliée au canal $D_{h-1-v}$ (($v = j$ modulo $h$)) du bus données et en outre on place sur ce bus (éventuellement dédoublé s'il y a lecture et écriture) un dispositif Perm(h) dont les entrées e(i) sont reliées aux canaux $D_i$ provenant de la mémoire et les sorties s(i) aux $D_i$ vers l'extérieur (éventuellement un autre dispositif Perm(h), pour l'écriture, dont les entrées proviennent de l'extérieur du système et les sorties forment le bus données allant à la mémoire). En ce qui concerne les commandes de Perm(h) la question de leur contrôle sera laissée au gré du désigner : en effet, on pourrait songer, dans un premier temps, à installer sur la partie $A_{t-1}, .., A_0$ du bus adresses un dispositif qui calcule le reste q de l'adresse dans la division par h, et dont les sorties constitueraient les commandes de Perm(h) ; on peut toutefois observer que si le contrôle de ces commandes est laissé au processeur, les possibilités sont accrues, précisément parce que le choix de la permutation réalisée sur le bus n'est pas imposé par la valeur d'adresse.

On notera qu'il est également possible de ne pas disposer de permutateur sur le bus données, en laissant au processeur, le soin de réarranger éventuellement les données, lorsqu'il lit, ou avant une écriture.

Jusqu'ici on ne s'est pas étendu sur les questions relatives à l'écriture et à la lecture ; en effet ces questions ont des solutions immédiates : quand un groupe de h cellules est sélecté, le réseau reçoit en même temps, de façon classique un ordre du type $R/\overline{W}$ ; lorsque le bus données est bidirectionnel, on le dédouble en plaçant sur chaque branche un permutateur, l'un orienté mémoire vers l'extérieur, l'autre en sens inverse, et $R/\overline{W}$ invalidant l'un quand l'autre est en fonction et réciproquement. Ces techniques sont familières au spécialiste.

Pour $P_2(M)$ et $P'_2(M)$ on procède ainsi : chaque cellule $M_{i,j}$ est reliée au canal $D_{h'-1-u, h-1-v}$ ($u = (i$ modulo $h'$) $v = (j$ modulo $h$)) du bus données à hh' canaux notés ($D_{x',x}$ ($x' \in [0, h'-1] x \in [0, h-1]$) ; chacune des h' nappes notée $D_{u,h-1} .... D_{u,0}$ ($u \in [0, h'-1]$) atteint un dispositif Perm(h), à h commandes $q_0, .., q_{h-1}$, dont les sorties sont notées $I_{u,h-1} ... I_{u,0}$, et dont la fonction est de permuter les entrées sur les sorties ainsi : (pour la commande $q_j$) $(D_{u,h-j-1} D_{u,h-j-2} .. D_{u,0} D_{u,h-1} ... D_{u,h-j}) \rightarrow (I_{u,h-1} I_{u,h-2} ... I_{u,0})$ Ces h' dispositifs ont chacun les mêmes commandes $q_j$.

Chacune des h nappes notée $I_{h'-1,v} ... I_{0,v}$ ($v \in [0, h-1]$) atteint un dispositif Perm(h'), à h' commandes

$$q'_0, .., q'_{h'-1}$$

dont les sorties sont notées $J_{h'-1,v} .. J_{0,v}$, et dont la fonction est de permuter les entrées sur les sorties ainsi : (pour la commande $q'_j$) $(I_{h'-1,v} ... I_{0,v} I_{h'-1,v} ....... I_{h'-i,v}) \rightarrow (J_{h'-1,v} ........ J_{0,v})$. Ces h dispositifs ont chacun les mêmes commandes $q'_j$.

Il ne reste plus qu'à relier les canaux $J_{x',x}$ aux canaux $D_{x',x}$ du bus dirigé vers l'extérieur du système. Le dispositif ainsi obtenu, fait de h Perm(h') et h' Perm(h) est noté Perm(h, h') ; ses commandes sont les couples $q_x q'_x$ et leur contrôle est laissé au désigner pour les raisons déjà exposées plus haut ; si on veut lire et écrire, le bus $D_{x',x}$ est dédoublé et on place sur chaque branche un Perm(h, h'), orienté, et invalidé par $R/\overline{W}$, comme on l'a dit plus haut. On note que la généralisation à des dimensions supérieures à 2 se fait aisément. Enfin il est possible d'omettre de tels permutations, en laissant le processeur réarranger les données après lecture, ou les arranger avant écriture.

Remarque 1.

On revient au procédé Pro' 1 ; soit un dispositif obtenu par ce procédé ; on suppose alors qu'on asservisse la commande $R^+$ générée par le dispositif DR2L'(a) et la condition $R^-$ de telle sorte que $R^-$ et $R^+$ soient équivalentes ; alors on constate que les commandes $S_{i,j}$ sont activées conformément aux spécifications imposées pour $P_1$, puisqu'il n'est plus nécessaire alors de distinguer entre des conditions de report antérieur d'une part, et des débordements extérieurs de l'autre, le dispositif étant alors bouclé sur lui-même. Cette remarque montre que le procédé Pro'$_1$ peut servir également à la solution de $P_1$ ; ceci sera exploité dans les modes de réalisation. On peut faire des remarques analogues en ce qui concerne le procédé Pro' 2 et le problème $P_2$.

Remarque 2.

A plusieurs reprises, dans le texte figure des mentions du genre "(cf p. x, li. y)" ; leur sens est de se référer à la page x et à la ligne y de cette page (x), dans la description.

Remarque 3.

Lorsqu'on définit, dans l'exposé des problèmes, les conditions d'activation des commandes, on a précisé dans le texte, celles qui devaient être mises à 1 ; il est sous-entendu alors, que celles non mentionnées sont à 0.

DESCRIPTION DES DESSINS

- Les dessins 1 et 2 servent d'images intuitives, pour faciliter la compréhension des procédés Pro 1 et Pro' 1 ; ils sont commentés plus haut dans la description.
- Le dessin 3 représente un permutateur Perm(h), dans le cas h = 4, réalisant les 4 permutations circulaires :
$(D_3D_2D_1D_0 \rightarrow D_3D_2D_1D_0 \ (q = 0))$,
$(D_0D_3D_2D_1 \rightarrow D_3D_2D_1D_0 \ (q = 1))$,
$(D_1D_0D_3D_2 \rightarrow D_3D_2D_1D_0 \ (q = 2))$,
$(D_2D_1D_0D_3 \rightarrow D_3D_2D_1D_0 \ (q = 3))$.
Ce dispositif est commenté plus haut dans la description.
- Le dessin 4 représente un dispositif Perm(h, h'), formé de h' dispositifs Perm(h) et h dispositifs Perm(h'), dans le cas h = h' = 4. Il sert dans le cadre des problèmes $P_2(M)$ et $P'_2(M)$, et il est commenté plus haut.
- Le dessin 5 est associé au problème $P_1$ ; il représente un dispositif noté DChN(a)1, du type DChN(a).
- Le dessin 6 est également associé au problème $P_1$, et représente un dispositif DChN(a)2 du type DChN(a).
- Le dessin 7 est associé au problème $P'_1$ ; il représente un dispositif noté DRhN(a)1 du type DRhN(a).
- Le dessin 8 est également associé au problème $P'_1$, et représente un dispositif DRhN(a)2 du type DRhN(a).
- Le dessin 9 est associé à $P_1$ et représente un dispositif noté DCh du type DChN dans les cas particulier N = 2h.
- Le dessin 10 est associé aux problèmes $P'_1$ ou $P'_1(M)$. Il représente un dispositif noté DRh(LK)(a)1 obtenu grâce au procédé Pro' 1 dans le cas particulier où d = K/2.
- Le dessin 11 est associé aux mêmes problèmes que ci-dessus, et représente un dispositif noté DRh(LK)(a)2 obtenu grâce à Pro' 1 dans le cas où d = K – h – 1.
- Le dessin 12 est associé aux problèmes $P'_2$ ou $P'_2(M)$. Il représente un dispositif noté DR(hh')(KL)(a).

Tous les dessins de 5 à 12 sont par ailleurs commentés dans ce qui suit, à la partie "modes de réalisation et dispositifs particuliers", après laquelle seront exposés divers avantages de l'invention.

MODES DE REALISATION. DISPOSITIFS PARTICULIERS.

- Dispositif DChN(a)1.

Le problème posé est $P_1$. B est formé de N canaux binaires, notés $C_0$, ...., $C_{N-1}$ ; la réalisation de chacune des conditions du groupe exclusif correspond à $(C_i = 1$ ou $C_j = 0 \ \forall j \neq i) \ \forall i \in [0, N – 1]$, et éventuellement la condition d'inactivation A étant réalisée pour $C_i = 0 \ \forall i \in [0, N – 1]$. On câble alors en OU les canaux $C_i$ ainsi : (le signe + entre 2 canaux $C_i$ signifie OU)

$$S_i = C_{i-h+1} + C_{i-h+2} + \ldots - C_i \qquad \forall\, i \in [h-1, N-1] \qquad (E1)$$

$$S_i = C_{N-h+i+1} + \ldots + C_{N-1} + C_0 + \ldots + C_i \qquad \forall\, i \in [0, h-2] \qquad (E2)$$

Le dessin 5 représente un tel câblage.

— Dispositif DChN(a)2.

Le problème posé est $P_1$. B est formé de $n + 1$ canaux binaires, $A_{n-1}, \ldots, A_0, A^+$ ($N = 2^n$). La condition A éventuelle est vraie pour $A = 0$, les N autres étant matérialisées par les $2^n$ codes binaires portés par $A_{n-1}, \ldots, A_0$. Il suffit alors de faire du canal $A^+$ le chip select d'un décodeur $n \times 2^n$, dont les sorties formeront les entrées du dispositif DChN(a)1 décrit ci-dessus.

Le dessin 6 représente un tel câblage.

— Dispositif DRhN(a)1.

Le problème posé est $P'_1$. B est formé de $N + h - 1$ canaux binaires, notés

$$\overline{R}_{N-h+1}, \ldots, \overline{R}_{N-1}, C_0, \ldots, C_{N-1};$$

la réalisation de chacune des conditions spécifiées dans $P'_1$ correspond à la mise à 1 d'un seul des canaux, l'inactivation correspondant à la mise à 0 de tous. On câble alors en OU tous ces canaux ainsi :

$$S_i = C_{i-h+1} + C_{i-h+2} + \ldots + C_i \qquad \forall\, i \in [h-1, N-1] \qquad (E3)$$

$$S_i = \overline{R}_{N-h+i+1} + \ldots + \overline{R}_{N-1} + C_0 + \ldots + C_i \qquad \forall\, i \in [0, h-2] \qquad (E4)$$

$$R^+ = C_{N-h+1} + \ldots + C_{N-1} \qquad (E5)$$

Le dessin 7 représente un tel dispositif.

— Dispositif DRhN(a)2.

Le problème posé par $P'_1$. B est formé de $N + 2$ canaux binaires, $A^+, R^-, A_{n-1} \ldots A_0$. La condition éventuelle d'inactivation est réalisée par $A^+ = 0$ et $R^- = 0$, les conditions de report correspondent à $A^+ = 0$, $R^- = 1$ et $A_{t-1} \ldots A_0$ porte le code binaire d'un nombre entier 1 et $h - 1$, et les autres conditions au nombre de N sont réalisées pour $A^+ = 1$, $R^- = 0$ et $A_{n-1} \ldots A_0$ porte le code d'un nombre entre 0 et $N - 1$. ($N = 2^n$ et $h = 2^t$). On associe alors un décodeur $t \times h$ aux canaux $A_{t-1} \ldots A_0$, dont les sorties sont nommées

$$\overline{R}_{N-h}, \overline{R}_{N-h+1}, \ldots, \overline{R}_{N-1}$$

et qui correspondent aux valeurs 0, 1, …… $h - 1$ portées par $A_{t-1} \ldots A_0$, ce décodeur D' étant sélecté par le canal $R^-$ ; on associe ensuite un décodeur D $n \times 2^n$ aux canaux $A_{n-1} \ldots A_0$, sélecté par $A^+$, et ses commandes $C_0, \ldots, C_{N-1}$ associées aux valeurs d'adresse de 0 à $N - 1$. On laisse alors le canal

$$\overline{R}_{N-h}$$

"en l'air" et on fait des canaux

$$\overline{R}_{N-h+1}, \ldots, \overline{R}_{N-1}, C_0, \ldots, \overline{C}_{N-1}\, .$$

les entrées du dispositif DRhN(a)1 décrit ci-dessus.

Le dessin 8 représente le dispositif obtenu.

– Dispositif DCh.

Le problème posé est de nouveau $P_1$ dans le cas où il faut faire glisser une fenêtre de largeur h dans un champ dont la taille est le double. $h = 2^t$, et il y a $t + 1$ canaux binaires qui constituent le bus B, $A_t A_{t-1} .... A_0$. L'inactivation n'a jamais lieu, les réalisations des autres conditions étant associées à chacun des codes binaires portés par $A_t A_{t-1} .. A_0$. On entre dans un décodeur txh les canaux $A_{t-1} ... A_0$ ; le décodeur est toujours sélecté et on note ses sorties $C_0 ... C_{h-1}$. On réalise alors le câblage suivant :

$$S_i = A_t \text{ OUX } (C_0 + C_1 + ... + C_i) \; \forall i \in [0, h-1] \quad (E6)$$

$$S_{h+i} = \text{NON}(S_i) \qquad\qquad \forall i \in [0, h-1] \quad (E7)$$

Le dessin 9 représente un tel dispositif.

– Dispositif DRh(LK)(a)1

Le problème posé est $P'_1(M)$. On va appliquer le procédé Pro' 1. On utilise les notations qui sont définies dans les deux encadrés qui sont référencés ci-dessus et auxquels on est prié de se rapporter. On rappelle comment sont réalisées les conditions :

On a $k+\ell+2$ canaux binaires: $R^-, A_{k-1}, .., A_0, A'_{\ell-1}, .., A'_0, A^+$.

•$A=1$ correspond à: $A^+=0, R^-=0$

•$R^-_{K-h+j}=1$ correspond à: $A^+=0, R^-=1, A_{k-1}...A_0$ porte le code binaire de $K-h+j$, pour $j \in [1, h-1]$ .

•$C_{ij}=1$ correspond à: $A^+=1, R^-=0, A_{k-1}...A_0$ et $A'_{\ell-1}...A'_0$ portent les codes respectifs de j et i.

D'après Pro' 1 il faut considérer les conditions $CK_j$ pour $j \in [0, K - h]$ et les conditions

$$( \quad CK_{K-h+j} \quad \text{OU } R^-_{K-h+j} ).$$

On note le fait que $A_{k-1} .. A_0$ porte le code de j, j(K) et on définit de manière analogue la notation i(L). On constate alors que : ($\overline{A}$ étant éventuelle, elle n'est pas considérée ici).

$$(CK_{K-h+j} \quad \text{OU} \quad R^-_{K-h+j}) = ((K-h+j)(K)) \quad \text{OU} \quad ((\overline{A}+\text{ET } R^-) \text{ ET } (K-h+j)(K))$$

$$\text{Donc } (CK_{K-h+j} \text{ OU } R^-_{K-h+j}) = (K-h+j)(K)$$

On est donc très exactement dans la situation de type $P_1$ particularisée dans l'exposé du dispositif DChN(a)2. On mettra ici à 1 la commande qui sélectera le décodeur de DChN(a)2 (ici N = K) dont les entrées sont : $A_{k-1} ... A_0$.

Remarque 4 :

On aurait pu tenir compte de $\overline{A}$, dont il a été dit qu'elle est éventuelle ; le dispositif aurait été le même, avec la commande de sélection du décodeur contrôlée par $A^+$ et $R^-$. On continue selon Pro' 1 ; on choisit ici d = K/2 – 1. Alors la condition D' = $CK_0$ OU ... OU $CK_d$ est réalisée quand $A_{k-1}$ ... $A_0$ il y a une adresse située entre 0 et K/2 – 1, et la condition D'' est réalisée dans le cas contraire. Or ceci est matérialisé par l'état du canal $A_{k-1}$ qui est à 0 dans le premier cas et à 1 dans le second. D'autre part il est clair qu'ici la réunion des conditions

$$R^-_{K-h+j}$$

est la condition $\overline{A}^+$ et $R^-$. Toujours d'après Pro' 1 il faut alors considérer les conditions : $\overline{A}^+$ ET $R^-$, A et les $CL_i$ ET $\overline{A}$ ET D' ainsi que les $CL_i$ ET $\overline{A}$ ET D''. Or, dans le cas présent $CL_i$ ET $\overline{A}$ ET D' est réalisée lorsqu'on a i(L), $A_{k-1} = 0$, $A^+ = 1$ et $R^- = 0$. On est donc très exactement dans une situation de type $P'_1$ particularisée dans l'exposé du dispositif DRhNa2, qui ici se simplifie encore du fait que le glissement se fait de 2 en 2, de sorte que le décodeur D' intervenant dans ce dispositif prend la forme dégénérée de la seule commande $R^-$ ; au total

$$A_{k-1}, A'_{l-1}, \ldots, A'_0$$

forment les entrées d'un décodeur activé par $A^+$ ; le canal $R^-$ et les 2L sorties du décodeur forment alors les entrées d'un dispositif DR2L'(a)1, le tout formant comme on l'a dit plus haut un dispositif DR2L'(a)2. Ici L' = 2L. On câble alors en ET selon Pro' 1. Le dessin 10 représente le dispositif DRh(LK)(a)1 qu'on vient d'exposer.

– Dispositif DRh(LK)(a)2.

Le dessin 11 le représente. Le problème posé est du type $P'_1$ et peut être également interprété dans le cadre de $P'_1$(M).

Le système est atteint par K + L + 1 canaux binaires, $R^-$, $CK_0$, .., $CK_{K-1}$, $CL_{L-1}$, ..., $CL_0$.

$\cdot A=1$ correspond à : $(CK_j=0 \; \forall_j)$ OU $(CL_i=0 \; \forall i)$

$\cdot R^-_{K-h+j}=1$ correspond à : $R^-=1$, $CK_{K-h+j}=1$ et tous les autres canaux à 0.

$\cdot C_{ij}=1$ correspond à : $R^-=0$ , $CL_i=1$, $CK_j=1$, et tous les autres canaux à 0.

On applique exactement Pro' 1, comme il a été fait ci-dessus : $CK_j$ ET $\overline{A}$ = $CK_j$ à cause de la définition de A et $CK_j$.

$$(CK_{K-h+j} \text{ ET } \overline{A}) \text{ OU } R^-_{K-h+j} = CK_{K-h+j} \text{ OU}(R^- \text{ ET } CK_{K-h+j}) \text{ donc}$$
$$= CK_{K-h+j}$$

On est alors dans la situation de type $P'_1$ particularisée dans l'exposé du dispositif DChK(a)1 ; on entre donc dans un tel dispositif les canaux $CK_{k-1}$, .., $CK_0$ ; les sorties de ce dispositif sont $S_0$, ...., $S_{K-1}$.

Le choix de d selon Pro' 1 s'opère ainsi : d = K – h – 1 ; dans ces conditions le fait que D' = 1 signifie que le canal $S_{K-1}$ est à 0, et qu'il est 1 lorsque D'' = 1. Il faut alors former les conditions : $R^-$ (puisque la réunion des

$$R^-_{K-h+j}$$

vaut ici $R^-$) et les $CL_i$ ET $\overline{A}$ ET D' ainsi que les $CL_i$ ET $\overline{A}$ ET D'', et A.

Or, dans le cas présent $CL_i$ ET $\overline{A}$ ET D' = $CL_i$ ET $\overline{S}_{K-1}$. On matérialise donc les 2L conditions : $CL_i \cdot S_{K-1}$ et $CL_i \cdot \overline{S}_{K-1}$ ; les 2L canaux obtenus et le canal $R^-$ forment alors les entrées d'un dispositif DR2L'(a)1 de type DRhN(a)1 associé au problème $P'_1$ et qui est exposé ci-avant. Il ne reste plus qu'à câbler en ET logique les sorties de ce dispositif avec les sorties $S_j$ du précédent, comme il est dit dans Pro' 1. Pour interpréter tout ceci

selon $P'_1(M)$, il suffit de considérer les $CK_j$ et $CL_l$ comme sorties de décodeurs ligne et colonne.

— Dispositif DR(hh')(KL)(a).

Il est représenté dans le dessin 12. Le problème posé est $P'_2(M)$, et on applique Pro' 2. L'application du procédé est ici immédiate : on associe à chacun des bus ligne et colonne un dispositif de type DRhN(a)2, l'un (colonne) avec la valeur h, l'autre (ligne) avec la valeur h', et on câble les sorties en ET logique comme il est indiqué par Pro' 2.

Remarque 5 :

En utilisant la Remarque 1, on constate que sont résolus les problèmes $P_2(M)$, $P_1(M)$, et d'autres voisins; en effet, dans les dispositifs qu'on vient de construire, DR(hh')(KL)(a), DRh(LK)(a)2, DRh(LK)(a)1, DRhN(a)2, il suffit pour les boucler sur eux-mêmes, c'est-à-dire pour supprimer les conditions de report de relier, respectivement pour les dispositifs indiqués ci-dessus, $R_L^+$ à $R_L^-$ et $R_K^+$ à $R_K^-$, $R^+$ à $R^-$, $R^+$ à $R^-$, $R^+$ à $R^-$.

Remarque 6 :

Le long de tout l'exposé, on aura noté qu'on s'est exprimé dans le cadre de la logique positive ; ainsi par exemple, les décodeurs étaient sélectés pour des valeurs 1 de leur commande, alors que ce peut être l'opposé. Il ne faut y voir aucune restriction spéciale.

## APPLICATIONS ET AVANTAGES DE L'INVENTION

Les applications aux mémoires ont déjà été signalées. On peut ajouter que ces procédés et dispositifs sont susceptibles d'être intégrés ; Une application (ante-mémoires) qu'on peut avoir en vue est celle aux RAM statiques à très hautes performances ; on observe en effet que les dispositifs décrits par exemple dans les dessins 10, 11 et 12 présentent une structure telle, que, d'une part, le temps de sélection d'une suite de cellules ne diffère de celui d'une mémoire classique que du temps de la traversée d'une porte OU, et d'autre part la question de l'organisation matricielle de la mémoire est résolue. Par ailleurs les avantages présentés par la possibilité de glissement sont évidents, puisque tout ce qu'il est possible de faire avec les anciennes structures de mémoires continue de l'être, et que de plus de nouvelles possibilités sont offertes. On signalera aussi le fait que, dans tous les problèmes où il est nécessaire de contrôler le voisinage d'un point, les dispositifs proposés constitueront une aide considérable. On note enfin que les boîtiers mémoires éventuellement intégrés selon les procédés décrits, s'assemblent immédiatement entre eux : $R^+$ de l'un = $R^-$ de l'autre.

## REMARQUE 7

A plusieurs reprises, dans le texte de la description, on fait référence à une condition dénommée A, éventuelle, qui ne présente aucun caractère essentiel et dont la réalisation traduit simplement le cas particulier de la sélection d'une ensemble vide de commandes.

Le dessin 13 fournit une image aidant à la compréhension de la solution des problèmes du type $P_1$ et $P'_1$ : un dispositif de base 1, de type DCh, reçoit une partie de la condition d'activation, par l'intermédiaire d'un canal $B_K$ (6), ce qui détermine l'activation simultanée de h colonnes (7) successives selon un ordre circulaire. Simultanément, un autre dispositif de base 2, de type DC2 ou DRL, reçoit, d'une part, une autre partie de la condition d'activation, par l'intermédiaire d'un canal $B_L$ (5) ainsi que l'indication Cd qu'un certain numéro de colonne (d) a été ou non franchi, ce qui détermine l'activation simultanée de deux portions de lignes, la première 3, choisie dans un ensemble interconnecté avec une partie des colonnes, la seconde 4, choisie dans un ensemble interconnecté avec le reste des colonnes. Ainsi, à chaque instant sont activées, soit deux portions de lignes de même rang $S'_i$ et $S''_i$, soit deux portions $S''_i$ et $S'_{i+1}$, de sorte que, dans une situation comme dans l'autre, on réalise l'activation d'exactement h commandes, à l'exception des situations de débordement.

En résumé, la présente invention se rapporte à un dispositif d'activation, au sein d'un ensemble de commandes organisées matriciellement, de certaines d'entre elles, en fonction d'une condition de sélection. Selon l'invention, pour permettre, au sein de la matrice des $K \cdot L$ commandes, l'activation en parallèle et simultanée d'une sous-matrice de $h \cdot h'$ commandes au plus, et ceci pour une position quelconque de ladite sous-matrice, h, h', K et L étant des nombres tels que $4 \leq 2h \leq K$ et $4 \leq 2h' \leq L$,

ce dispositif comporte

– un ensemble de K · L portes ET, réalisant l'interconnexion de K commandes de colonnes ordonnées de 0 à K − 1 et notées $S_0$, ..., $S_j$, ... $S_{K-1}$ et de L commandes de lignes ordonnées de 0 à L − 1 et notées $S'_0$, ..., $S'_i$, ... $S'_{L-1}$ selon les fonctions logiques $S'_i$ ET $S_j$, les sorties desdites portes correspondant biunivoquement à l'ensemble des K · L commandes organisées matriciellement,

– un premier moyen d'activation des commandes de colonnes, qui, recevant un premier signal représentatif de la réalisation d'une partie de la condition de sélection, et ce signal désignant la première des commandes de colonnes à activer, sélectionne et déclenche en parallèle l'activation simultanée de ladite première commande et des h − 1 suivantes au plus, et

– un second moyen d'activation des commandes de lignes, qui, recevant un second signal représentatif de la réalisation d'une autre partie de la condition de sélection, et ceci en même temps que le premier moyen reçoit son signal, et ce second signal désignant la première des commandes de lignes à activer, sélectionne et déclenche en parallèle l'activation simultanée de ladite première commande et des h' − 1 suivantes au plus,

tandis que, pour permettre un mode de fonctionnement avec report sur les colonnes, le premier moyen comporte en outre un canal de report de sortie $R^+_K$, à destination de l'extérieur du dispositif, ledit canal transmettant un signal indiquant s'il y a débordement, vers un autre dispositif semblable selon les colonnes, de la sous-matrice activée et cela lorsque le numéro de la première des commandes de colonnes activées est supérieur ou égal à K − h + 1, et que ce premier moyen comporte en outre un canal de report en entrée, $R^-_K$, recevant de l'extérieur du dispositif un signal indiquant s'il y a débordement depuis un autre dispositif semblable, ledit signal étant alors combiné avec le premier signal de façon à donner le nombre exact des commandes de colonnes à activer à partir de la première, $S_0$,

et que, pour permettre un mode de fonctionnement avec report sur les lignes, le second moyen comporte en outre un canal de report de sortie, $R^+_L$, à destination de l'extérieur du dispositif, ledit canal transmettant un signal indiquant s'il y a débordement, vers un autre dispositif semblable selon les lignes, de la sous-matrice activée et cela lorsque le numéro de la première des commandes de lignes activées est supérieur ou égal à L − h' + 1, et que ce second moyen comporte en outre un canal de report en entrée, $R^-_L$, recevant de l'extérieur du dispositif un signal indiquant s'il y a débordement depuis un autre dispositif semblable, ledit signal étant alors combiné avec le second signal de façon à donner le nombre exact des commandes de lignes à activer à partir de la première $S'_0$.

Le mode de fonctionnement du premier moyen peut être circulaire, de façon que, dans l'ordre de la numérotation des commandes de colonnes, la dernière, $S_{K-1}$, est suivie de la première, $S_0$, et h − 1 commandes de colonnes, exactement, sont activées.

Le mode de fonctionnement du second moyen peut être circulaire, de façon que, dans l'ordre de la numérotation des commandes de lignes, la dernière, $S'_{L-1}$, est suivie de la première, $S'_0$, et h' − 1 commandes de lignes, exactement, sont activées.

Dans une forme de réalisation particulière d'un dispositif fonctionnant avec report sur les lignes et sur les colonnes et comprenant en entrée

un premier bus d'adresses $A^+ A_{k-1} ..... A_{t-1} ..... A_0$, avec $h = 2^t$ et $K = 2^k$, ledit premier bus délivrant le premier signal, et

un second bus d'adresses, $A'^+ A'_{l-1} ..... A'_{t'-1} ..... A'_0$ avec $h' = 2^{t'}$ et $L = 2^l$, ledit second bus délivrant le second signal,

– le canal de report en entrée du premier moyen est un simple canal binaire $R^-_K$

– le canal de report en entrée du second moyen est un simple canal binaire $R^-_L$,

– le premier moyen est ainsi réalisé :

il comprend un premier décodeur activé lorsque $R^-_K$ transmet le signal de débordement, ledit décodeur ayant pour entrées les canaux $A_{t-1}$, ..., $A_0$ et pour sorties h commandes notées $R^-_{K-h}\ R^-_{K-h+1}\ ...\ R^-_{K-1}$

et il comprend un second décodeur activé lorsque $A^+ = 1$, ledit décodeur ayant pour entrées les canaux $A_{k-1} ... A_0$ et pour sorties K commandes notées $C_0, ... C_{K-1}$

et les commandes d'activation de colonnes sont câblées conformément aux équations logiques

$S_j = C_{j-h+1} + ..... + C_j$ pour j variant de h − 1 à K − 1 bornes comprises

$S_j = R^-_{K-h+j+1} + ..... + R^-_{K-1} + C_0 + ..... + C_j$ pour j variant de 0 à h − 2 bornes comprises

– le second moyen est ainsi réalisé :

il comprend un premier décodeur activé lorsque $R^-_L$ transmet le signal de débordement, ledit décodeur ayant pour entrées les canaux $A'_{t'-1}$, ..., $A'_0$ et pour sorties h' commandes notées $R^-_{L-h'}, R^-_{L-h'+1} ..... R^-_{L-1}$

et il comprend un second décodeur activé lorsque $A'^+ = 1$,

ledit décodeur ayant pour entrées les canaux $A'_{l-1} ... A'_0$ et pour sorties L commandes notées $C'_0, ..., C'_{L-1}$

et les commandes d'activation de lignes sont câblées conformément aux équations logiques

$S'_i = C'_{i-h'+1} + ... + C'_i$ pour i variant de h' − 1 à L − 1 bornes comprises

$S'_i = R^-_{L-h'+I+1} + ... + R^-_{L-1} + C'_0 + ... + C'_i$ pour i variant de 0 à h' – 2 bornes comprises,

– le canal de report de sortie d'un premier moyen, $R^+_K$, est un simple canal binaire formant la sortie d'un câblage vérifiant l'équation logique

$R^+_K = C_{K-h+1} + ... + C_{K-1}$,

– le canal de report de sortie du second moyen, $R^+_L$, est un simple canal binaire formant la sortie d'un câblage vérifiant l'équation logique

$R^+_L = C'_{L-h'+1} + ... + C'_{L-1}$.

Suivant un autre aspect de l'invention, celle-ci se rapporte à un dispositif d'activation, au sein d'un ensemble de commandes organisées matriciellement, de certaines d'entre elles, en fonction d'une condition de sélection. Selon l'invention, pour permettre, au sein de la matrice des $K \cdot L$ commandes, l'activation en parallèle et simultanée d'un train de h commandes au plus, et ceci pour une position quelconque de l'origine de ce train, et de façon que l'ordre dans lequel se trouvent les commandes soit le suivant :

$S_{0,0}$, $S_{0,1}$, ... $S_{0,K-1}$ puis $S_{1,0}$, $S_{1,1}$ ... $S_{1,K-1}$ et ainsi de suite jusqu'à $S_{L-1,0}$, ... $S_{L-1,K-1}$

h, K, L étant des nombres vérifiant $4 \leqq 2h \leqq K$ et $L \geqq 2$,

le dispositif comporte :

– un ensemble de $K \cdot L$ portes ET réalisant une interconnexion de K commandes de colonnes notées $S_0$, ..., $S_{K-1}$ avec $2 \cdot L$ commandes de portions de lignes, notées $S'_0$, $S''_0$, ..., $S'_{L-1}$, $S''_{L-1}$ selon les fonctions logiques $S'_i$ ET $S_j$ pour i variant de 0 à $L - 1$ et j variant de 0 à d, bornes comprises,
et les fonctions logiques $S''_i$ ET $S_j$ pour i variant de 0 à $L - 1$ et j variant de $d + 1$ à $K - 1$, bornes comprises, d étant un nombre quelconque mais choisi entre $h - 2$ et $K - h$, bornes comprises, et les sorties desdites portes correspondant à l'ensemble des $K \cdot L$ commandes organisées matriciellement,
– un premier moyen d'activation des commandes de colonnes, qui, recevant un premier signal représentatif de la réalisation d'une partie de la condition de sélection, et ce signal désignant la première des commandes de colonnes à activer, sélectionne et déclenche en parallèle l'activation simultanée de ladite première commande et des $h - 1$ suivantes, le mode de fonctionnement de ce premier moyen étant circulaire de sorte que, dans la succession des commandes de colonnes $S_0$, ..., $S_{K-1}$, la dernière $S_{K-1}$ est suivie de la première $S_0$, et
– un second moyen d'activation des commandes de portions de lignes, qui, recevant, d'une part, un second signal, et ceci en même temps que le premier moyen reçoit son signal, et ce second signal désignant un couple de portions de lignes de même rang i, et recevant, d'autre part, un troisième signal indiquant si la première des commandes de colonnes à activer par le premier moyen est de rang j inférieur ou égal à d, ou bien au contraire de rang j supérieur à d, sélectionne et déclenche en parallèle l'activation simultanée des deux commandes de portions de lignes de rang i, $S'_i$ et $S''_i$, lorsque le rang j est inférieur ou égal à d, et qui, dans le cas contraire, sélectionne et déclenche en parallèle l'activation simultanée des deux commandes de portions de lignes $S''_i$ et $S'_{i+1}$.

Pour permettre un mode de fonctionnement avec report dans un tel dispositif, le second moyen peut comporter en outre une sortie de report $R^+$, à destination de l'extérieur ou dispositif, qui est activée lorsque la première des commandes de portion de ligne activée est $S''_{L-1}$, ainsi qu'une entrée de report $R^-$, recevant de l'extérieur du dispositif un signal qui indique si la seule commande de portion de ligne à activer est $S'_0$.

Le nombre d peut être choisi égal a $K/2$. Dans ce cas, selon une autre caractéristique de l'invention, dans un dispositif avec report comprenant un premier bus d'adresses $A_{k-1}$ ..... $A_0$ avec $2^k = K$, ce premier bus délivrant le premier signal, et
comprenant un second bus d'adresses $A^+A'_{l-1}$ ..... $A'_0$ avec $2^l = L$, ce second bus délivrant le second signal,
– le troisième signal est transmis par le seul moyen du canal $A_{k-1}$,
– le premier moyen est ainsi réalisé :
il comprend un décodeur toujours activé dont les k entrées sont les canaux du premier bus et les K sorties sont nommées $C_0$ ..... $C_{K-1}$
et il comprend un câblage dont les sorties forment les commandes d'activation des colonnes conformément aux équations logiques
$S_i = C_{i-h+1} ... + C_i$, i variant de $h - 1$ à $K - 1$ bornes comprises
$S_i = C_{K-h+i+1} + ..... + C_{K-1} + C_0 + ..... + C_i$, i variant de 0 à $h - 2$ bornes comprises
– le second moyen est ainsi réalisé :
il comprend un décodeur activé lorsque $A^+ = 1$, dont les $l + 1$ entrées sont les canaux $A'_{l-1}$ ..... $A'_0$ du second bus et $A_{k-1}$, et les 2L sorties sont notées $C'_0$, $C''_0$, ..... $C'_{L-1}$, $C''_{L-1}$, et
il comprend un câblage dont les sorties forment les commandes d'activation des portions de lignes conformément aux équations logiques
$S'_0 = R^- + C'_0$    $S'_i = C''_{i-1} + C'_i$ pour i variant de 1 à $L - 1$ bornes incluses
$S''_i = C'_i + C''_i$ pour i variant de 0 à $L - 1$ bornes incluses et $R^+ = C''_{L-1}$.

D'une manière générale, un dispositif selon l'invention peut être utilisé pour sélectionner en parallèle une pluralité de cellules de mémoires parmi $K \cdot L$ cellules de mémoires disposées selon un réseau matriciel, l'ensemble des commandes susceptibles d'être activées par le dispositif correspondant à l'ensemble des commandes de sélection des cellules de mémoire dans le réseau matriciel desdites cellules.

Un tel dispositif peut alors comprendre en outre :
– un bus données noté $D_{h-1}, \dots D_0$ qui est relié aux cellules de mémoires ainsi : la cellule commandée par $S_{ij}$ est reliée à $D_{h-1-v}$ avec $v = (j \bmod h)$,
– un permutateur circulaire, Perm(h), placé sur le bus données, dont les h entrées sont notées e(j), avec j variant de 0 à h – 1 bornes comprises, et les sorties s(j), qui possède h commandes notées $q_0 \dots q_{h-1}$, et qui, pour l'activation de la commande $q_i$, réalise la permutation

$$\begin{pmatrix} e~(h-i-1) & e~(h-i-2)\dots & e~(0) & e~(h-1)\dots & e~(h-i) \\ s~(h-1) & s~(h-2) & \dots~s~(i) & s(i-1)~\dots & s~(0) \end{pmatrix},$$

le bus données provenant de la mémoire étant appliqué sur les entrées de Perm(h) en faisant correspondre à $D_v$, e(v), et les sorties de Perm(h) étant reliées au bus données à destination de l'extérieur, en faisant correspondre à s(v), $D_v$.

Un tel dispositif peut aussi comprendre en outre :
– un bus données noté $D_{u,v}$ (u variant de 0 à h' – 1 et v de 0 à h – 1 bornes comprises), qui est relié aux cellules de mémoires ainsi :
la cellule commandée par $S_{ij}$ est reliée à $D_{h'-1-u,h-1-v}$ avec $u = (i \bmod h')$ et $v = (j \bmod h)$,
– un dispositif Perm(h, h') est placé sur le bus données, ledit dispositif comprenant h + h' commandes notées $q_0 \dots q_{h-1}~q'_0 \dots q'_{h-1}$ et hh' canaux d'entrée notés e(u, v), u variant de 0 à h' – 1 et v de 0 à h – 1, bornes comprises, et hh' canaux de sorties s(u, v), et tel que chacun des h' ensembles de canaux e(u, h – 1), ... e(u, 0) u variant de 0 à h' – 1, bornes comprises, atteint un dispositif Perm(h) dont les sorties sont notées $I_{u,h-1}, \dots I_{u,0}$ et qui pour sa commande $q_j$, j variant de 0 à h – 1 bornes comprises, réalise la permutation suivante :

$$\begin{pmatrix} e~(u,~h-j-1)\dots & e~(u,~0) & e~(u,~h-1) & e~(u,~h-j) \\ I_{u,h-1} & & & I_{u,0} \end{pmatrix},$$

les h lignes de commandes de ces h' dispositifs sont les mêmes pour chacun, chacun des h ensembles de canaux $I_{h'-1,v} \dots I_{0,v}$, v variant de 0 à h – 1 bornes comprises, atteint un dispositif Perm(h') dont les sorties sont s(h' – 1, v) ... s(o, v) et qui, pour sa commande $q'_i$, i variant de 0 à h' – 1 bornes comprises, réalise la permutation suivante :

$$\begin{pmatrix} I_{h'-i-1,v} & \cdots & I_{0,v} & I_{h'-1,v} & \cdots & I_{h'-i,v} \\ s~(h'-1,v) & & & & & s~(o,~v) \end{pmatrix},$$

les h' lignes de commandes de ces h dispositifs sont les mêmes pour chacun,
et le bus données provenant de la mémoire atteint le dispositif Perm(h, h'), de sorte qu'à $D_{u,v}$ correspond e(u, v), et les sorties de Perm(h, h') sont reliées au bus données dirigé vers l'extérieur du système de sorte qu'à s(u, v) correspond $D_{u,v}$.

## Revendications

1. Dispositif d'activation, au sein d'un ensemble de commandes organisées matriciellement, de certaines d'entre elles, en fonction d'une condition de sélection, pour permettre, au sein de la matrice des $K \cdot L$ commandes, l'activation en parallèle et simultanée d'une sous-matrice de $h \cdot h'$ commandes au plus, et ceci pour une position quelconque de ladite sous-matrice, h, h', K et L étant des nombres tels que $4 \leqq 2h \leqq K$ et $4 \leqq 2h'$

≦ L,

caractérisé en ce qu'il comporte

– un ensemble de K · L portes ET, réalisant l'interconnexion de K commandes de colonnes ordonnées de 0 à K – 1 et notées $S_0$, ..., $S_j$ ... $S_{K-1}$ et de L commandes de lignes ordonnées de 0 à L – 1 et notées $S'_0$, ..., $S'_i$,... $S'_{L-1}$ selon les fonctions logiques $S'_i$ ET $S_j$, les portes desdites portes correspondant biunivoquement à l'ensemble des K · L commandes organisées matriciellement,

– un premier moyen d'activation des commandes de colonnes, qui, recevant un premier signal représentatif de la réalisation d'une partie de la condition de sélection, et ce signal désignant la première des commandes de colonnes à activer, sélectionne et déclenche en parallèle l'activation simultanée de ladite première commande et des h – 1 suivantes au plus, et

– un second moyen d'activation des commandes de lignes, qui, recevant un second signal représentatif de la réalisation d'une autre partie de la condition de sélection, et ceci en même temps que le premier moyen reçoit son signal, et ce second signal désignant la première des commandes de lignes à activer, sélectionne et déclenche en parallèle l'activation simultanée de ladite première commande et des h' – 1 suivantes au plus,

tandis que, pour permettre un mode de fonctionnement avec report sur les colonnes, le premier moyen comporte en outre un canal de report de sortie $R^+_K$, à destination de l'extérieur du dispositif, ledit canal transmettant un signal indiquant s'il y a débordement, vers un autre dispositif semblable selon les colonnes, de la sous-matrice activée et cela lorsque le numéro de la première des commandes de colonnes activées est supérieur ou égal à K – h + 1, et que ce premier moyen comporte en outre un canal de report en entrée, $R^-_K$, recevant de l'extérieur du dispositif un signal indiquant s'il y a débordement depuis un autre dispositif semblable, ledit signal étant alors combiné avec le premier signal de façon à donner le nombre exact des commandes de colonnes à activer à partir de la première, $S_0$,

et que, pour permettre un mode de fonctionnement avec report sur les lignes, le second moyen comporte en outre un canal de report de sortie, $R^+_L$, à destination de l'extérieur du dispositif, ledit canal transmettant un signal indiquant s'il y a débordement, vers un autre dispositif semblable selon les lignes, de la sous-matrice activée et cela lorsque le numéro de la première des commandes de lignes activées est supérieur ou égal à L – h' + 1, et que ce second moyen comporte en outre un canal de report en entrée, $R^-_L$, recevant de l'extérieur du dispositif un signal indiquant s'il y a débordement depuis un autre dispositif semblable, ledit signal étant alors combiné avec le second signal de façon à donner le nombre exact des commandes de lignes à activer à partir de la première $S'_0$.

2. Dispositif selon la revendication 1, caractérisé en ce que le mode de fonctionnement du premier moyen est circulaire, de façon que, dans l'ordre de la numérotation des commandes de colonnes, la dernière, $S_{k-1}$, est suivie de la première, $S_0$, et h – 1 commandes de colonnes, exactement, sont activées.

3. Dispositif selon la revendication 1, caractérisé en ce que le mode de fonctionnement du second moyen est circulaire, de façon que, dans l'ordre de la numérotation des commandes de lignes, la dernière, $S'_{L-1}$, est suivie de la première, $S'_0$, et h' – 1 commandes de lignes, exactement, sont activées.

4. Dispositif selon la revendication 1, comprenant en entrée un premier bus d'adresses $A^+A_{k-1}$ ..... $A_{t-1}$ ..... $A_0$, avec h = $2^t$ et K = $2^k$, ledit premier bus délivrant le premier signal, et un second bus d'adresses, $A'^+A'_{l-1}$ ..... $A'_{t'-1}$ ..... $A'_0$ avec h' = $2^{t'}$ et L = $2^l$, ledit second bus délivrant le second signal, caractérisé en ce que

– le canal de report en entrée du premier moyen est un simple canal binaire $R^-_K$

– le canal de report en entrée du second moyen est un simple canal binaire $R^-_L$,

– le premier moyen est ainsi réalisé :

il comprend un premier décodeur activé lorsque $R^-_K$ transmet le signal de débordement, ledit décodeur ayant pour entrées les canaux $A_{t-1}$, ..., $A_0$ et pour sorties h commandes notées $R^-_{K-h}$ $R^-_{K-h+1}$ ... $R^-_{K-1}$

et il comprend un second décodeur activé lorsque $A^+$ = 1, ledit décodeur ayant pour entrées les canaux $A_{k-1}$ ... $A_0$ et pour sorties K commandes notées $C_0$, ... $C_{K-1}$

et les commandes d'activation de colonnes sont câblées conformément aux équations logiques

$S_j = C_{j-h+1} + ..... + C_j$ pour j variant de h – 1 à K – 1 bornes comprises

$S_j = R^-_{K-h+j+1} + ..... + R^-_{K-1} + C_0 + ..... + C_j$ pour j variant de 0 à h – 2 bornes comprises

– le second moyen est ainsi réalisé :

il comprend un premier décodeur activé lorsque $R^-_L$ transmet le signal de débordement, ledit décodeur ayant pour entrées les canaux $A'_{t'-1}$, ..., $A'_0$ et pour sorties h' commandes notées $R^-_{L-h'}$, $R^-_{L-h'+1}$ ..... $R^-_{L-1}$

et il comprend un second décodeur activé lorsque $A'^+$ = 1,

ledit décodeur ayant pour entrées les canaux $A'_{l-1}$ ... $A'_0$ et pour sorties L commandes notées $C'_0$,..., $C'_{L-1}$

et les commandes d'activation de lignes sont câblées conformément aux équations logiques

$S'_i = C'_{i-h'+1} + ... + C'_i$ pour i variant de h' – 1 à L – 1 bornes comprises

$S'_i = R^-_{L-h'+i+1} + ... + R^-_{L-1} + C'_0 + ... + C'_i$ pour i variant de 0 à h' – 2 bornes comprises,

21

– le canal de report de sortie du premier moyen, $R^+_K$, est un simple canal binaire formant la sortie d'un câblage vérifiant l'équation logique

$$R^+_K = C_{K-h+1} + ... + C_{K-1},$$

– le canal de report de sortie du second moyen, $R^+_L$, est un simple canal binaire formant la sortie d'un câblage vérifiant l'équation logique

$$R^+_L = C'_{L-h'+1} + ... + C'_{L-1}.$$

5. Dispositif d'activation, au sein d'un ensemble de commandes organisées matriciellement, de certaines d'entre elles, en fonction d'une condition de sélection, pour permettre, au sein de la matrice des $K \cdot L$ commandes, l'activation en parallèle et simultanée d'un train de h commandes au plus, et ceci pour une position quelconque de l'origine de ce train, et de façon que l'ordre dans lequel se trouvent les commandes soit le suivant:
$S_{0,0}, S_{0,1}, ...S_{0,K-1}$ puis $S_{1,0}, S_{1,1} ... S_{1,K-1}$ et ainsi de suite jusqu'à $S_{L-1,0}, ... S_{L-1,K-1}$
h, K et L étant des nombres vérifiant $4 \leqq 2h \leqq K$ et $L \geqq 2$, caractérisé en ce qu'il comporte :
– un ensemble de $K \cdot L$ portes ET réalisant une interconnexion de K commandes de colonnes notées $S_0$, ..., $S_{K-1}$ avec $2 \cdot L$ commandes de portions de lignes, notées $S'_0, S''_0, ..., S'_{L-1}, S''_{L-1}$ selon les fonctions logiques $S'_i$ ET $S_j$ pour i variant de 0 à L – 1 et j variant de 0 à d, bornes comprises,
et les fonctions logiques $S''_i$ ET $S_j$ pour i variant de 0 à L – 1 et j variant de d + 1 à K – 1, bornes comprises, d étant un nombre quelconque mais choisi entre h – 2 et K – h, bornes comprises, et les sorties desdites portes correspondant à l'ensemble des $K \cdot L$ commandes organisées matriciellement,
– un premier moyen (1) d'activation des commandes de colonnes (7), qui, recevant un premier signal représentatif de la réalisation d'une partie de la condition de sélection, et ce signal désignant la première des commandes de colonnes à activer, sélectionne et déclenche en parallèle l'activation simultanée de ladite première commande et des h – 1 suivantes, le mode de fonctionnement de ce premier moyen étant circulaire de sorte que, dans la succession des commandes de colonnes $S_0, ..., S_{K-1}$, la dernière $S_{K-1}$ est suivie de la première $S_0$,
– un second moyen (2) d'activation des commandes de portions de lignes (3, 4) qui, recevant, d'une part, un second signal, et ceci en même temps que le premier moyen reçoit son signal, et ce second signal désignant un couple de portions de lignes de même rang i, et recevant, d'autre part, un troisième signal indiquant si la première des commandes de colonnes à activer par le premier moyen est de rang j inférieur ou égal à d, ou bien au contraire de rang j supérieur à d, sélectionne et déclenche en parallèle l'activation simultanée des deux commandes de portions de lignes de rang i, $S'_i$ et $S''_i$, lorsque le rang j est inférieur ou égal à d, et qui, dans le cas contraire, sélectionne et déclenche en parallèle l'activation simultanée des deux commandes de portions de lignes $S''_i$ et $S'_{i+1}$.

6. Dispositif selon la revendication 5, caractérisé en ce que, pour permettre un mode de fonctionnement avec report,
le second moyen comporte en outre une sortie de report $R^+$, à destination de l'extérieur du dispositif, qui est activée lorsque la première des commandes de portion de ligne activée est $S''_{L-1}$,
et que ce second moyen comporte en outre une entrée de report $R^-$, recevant de l'extérieur du dispositif un signal qui indique si la seule commande de portion de ligne à activer est $S'_0$.

7. Dispositif selon la revendication 5 ou 6, caractérisé en ce que le nombre d est choisi égal à $K/2$.

8. Dispositif selon les revendications 6 et 7,
comprenant un premier bus d'adresses $A_{k-1} ..... A_0$ avec $2^k = K$, ce premier bus délivrant le premier signal, et
comprenant un second bus d'adresses $A^+ A'_{l-1} ..... A'_0$ avec $2^l = L$, ce second bus délivrant le second signal, caractérisé en ce que :
– le troisième signal est transmis par le seul moyen du canal $A_{k-1}$,
– le premier moyen est ainsi réalisé :
il comprend un décodeur toujours activé dont les k entrées sont les canaux du premier bus et les K sorties sont nommées $C_0 ..... C_{K-1}$
et il comprend un câblage dont les sorties forment les commandes d'activation des colonnes (7) conformément aux équations logiques
$S_i = C_{i-h+1} ... C_i$, i variant de h – 1 à K – 1 bornes comprises
$S_i = C_{K-h+i+1} + ..... + C_{K-1} + C_0 + ..... + C_i$, i variant de 0 à h – 2 bornes comprises
– le second moyen est ainsi réalisé :
il comprend un décodeur activé lorsque $A^+ = 1$, dont les l + 1 entrées sont les canaux $A'_{l-1} ..... A'_0$ du

second bus et $A_{k-1}$, et les 2L sorties sont notées $C'_0$, $C''_0$, ..... $C'_{L-1}$, $C''_{L-1}$, et

il comprend un câblage dont les sorties forment les commandes d'activation des portions de lignes (3, 4) conformément aux équations logiques

$S'_0 = R^- + C'_0$     $S'_i = C''_{i-1} + C'_i$ pour i variant de 1 à L – 1 bornes incluses

$S''_i = C'_i + C''_i$ pour i variant de 0 à L – 1 bornes incluses et $R^+ = C''_{L-1}$.

9. Dispositif selon l'une quelconque des revendications précédentes, caractérisé en ce que,

pour sélectionner en parallèle une pluralité de cellules de mémoires parmi K · L. cellules de mémoires disposées selon un réseau matriciel, l'ensemble des commandes susceptibles d'être activées par le dispositif correspond à l'ensemble des commandes de sélection des cellules de mémoire dans le réseau matriciel desdites cellules.

10. Dispositif selon les revendications 8 et 9, caractérisé en ce que, en outre, il comprend :

– un bus données notés $D_{h-1}$, ... $D_0$ qui est relié aux cellules de mémoires ainsi : la cellule commandée par $S_{i,j}$ est reliée à $D_{h-1-v}$ avec $v = (j\ modulo\ h)$,

– un permutateur circulaire, Perm(h), placé sur le bus données, dont les h entrées sont notées e(j), avec j variant de 0 à h – 1 bornes comprises, et les sorties s(j), qui possède h commandes notées $q_0$ ... $q_{h-1}$, et qui, pour l'activation de la commande $q_i$, réalise la permutation

$$\begin{bmatrix} e\ (h-i-1) & e\ (h-i-2)... & e\ (0) & e\ (h-1)... & e\ (h-i) \\ s\ (h-1) & s\ (h-2) & ...\ s\ (i) & s(i-1)\ ... & s\ (0) \end{bmatrix},$$

le bus données provenant de la mémoire étant appliqué sur les entrées de Perm(h) en faisant correspondre à $D_v$, e(v), et les sorties de Perm(h) étant reliées au bus données à destination de l'extérieur, en faisant correspondre à s(v), $D_v$.

11. Dispositif selon les revendications 4 et 9, caractérisé en ce qu'il comprend en outre :

– un bus données noté $D_{u,v}$ (u variant de 0 à h' – 1 et v de 0 à h – 1 bornes comprises), qui est relié aux cellules de mémoires ainsi :

la cellule commandée par $S_{i,j}$ est reliée à $D_{h'-1-u,h-1-v}$ avec $u = (i\ modulo\ h')$ et $v = (j\ modulo\ h)$,

– un dispositif Perm(h, h') est placé sur le bus données, ledit dispositif comprenant h + h' commandes notées $q_0$ ... $q_{h-1}$ $q'_0$ ... $q'_{h'-1}$ et hh' canaux d'entrée notés e(u, v), u variant de 0 à h' – 1 et v à h – 1, bornes comprises, et hh' canaux de sortie s(u, v) et tel que chacun des h' ensembles de canaux e(u, h – 1),... e(u, 0) u variant de 0 à h' – 1, bornes comprises, atteint un dispositif Perm(h) dont les sorties sont notées $I_{u,h-1}$, ... $I_{u,0}$ et qui par sa commande $q_j$, j variant de 0 à h – 1 bornes comprises, réalise la permutation suivante :

$$\begin{bmatrix} e\ (u,\ h-j-1)... & e\ (u,\ 0) & e\ (u,\ h-1) & e\ (u,\ h-j) \\ I_{u,h-1} & & & I_{u,0} \end{bmatrix},$$

les h lignes de commandes de ces h' dispositifs sont les mêmes pour chacun, chacun des h ensembles de canaux $I_{h'-1,v}$ ... $I_{0,v}$, v variant de 0 à h – 1 bornes comprises, atteint un dispositif Perm(h') dont les sorties sont s(h' – 1, v) ... s(o, v) et qui, pour sa commande $q'_i$, i variant de 0 à h' – 1 bornes comprises, réalise la permutation suivante :

$$\begin{bmatrix} I_{h'-i-1,v} & \cdots & I_{0,v} & I_{h'-1,v} & \cdots & I_{h'-i,v} \\ s\ (h'-1,v) & & & & s\ (0,\ v) \end{bmatrix},$$

les h' lignes de commandes de ces h dispositifs sont les mêmes pour chacun,

et le bus données provenant de la mémoire atteint le dispositif Perm(h, h'), de sorte qu'à $D_{u,v}$ correspond e(u, v), et les sorties de Perm(h, h') sont reliées au bus données dirigé vers l'extérieur du système de sorte qu'à s(u, v) correspond $D_{u,v}$.

### Ansprüche

1. Vorrichtung zur aktivierung von bestimmten Befehlen innerhalb eines Satzes von matrixartig organisierten Befehlen in Abhängigkeit von einer Auswahlbedingung, um in der Matrix, von $K \cdot L$ Befehlen die parallele gleichzeitige Aktivierung einer Untermatrix von höchstens $h \cdot h'$ befehlen zu bewirken, und zwar an einer beliebigen Position der Untematrix, wobei für $h$, $h'$, $K$ und $L$ gilt, $4 \leqq 2h \leqq K$ und $4 \leqq 2h' \leqq L$, dadurch gekennzeichnet, daß sie aufweist

– einen Satz von $K \cdot L$ UND-Gliedern die die Verbindung zwischen den $K$ Befehlen von Spalten die von 0 bis $K - 1$ gezählt und mit $S_0, ... S_j ... S_{K-1}$ bezeichnet werden, und den $L$ Befehlen von Zeilen, die von 0 bis $L - 1$ gezählt und mit $S'_0, ..., S'_i, ... S'_{L-1}$ bezeichnet werden, gemäß der logischen Funktion $S'_i$ UND $S_j$ verwirklichen, wobei die Ausgänge der UND-Glieder umkehrbar eindeutig dem matrixartig organisierten Satz von $K \cdot L$ Befehlen entsprechen,

– eine erste Einrichtung zur Aktivierung von Befehlen von Spalten, die, wenn sie ein erstes Signal empfängt, das die Erfüllung eines Teils der Auswahlbedingung anzeigt, wobei das Signal den ersten der zu aktivierenden Befehle von Spalten anzeigt, parallel gleichzeitig die Aktivierung des ersten Befehls und höchstens $h - 1$ folgender auswählt und auslöst, und

– eine zweite Einrichtung zur Aktivierung von Befehlen von Zeilen, die, wenn sie ein zweites Signal empfängt, das die Erfüllung eines anderen Teils der Auswahlbedingung anzeigt, wobei dies zum selben Zeitpunkt geschieht, zu dem die erste Einrichtung ihr Signal empfängt und wobei das zweite Signal den ersten der zu aktivierenden Befehle von Zeilen anzeigt, parallel gleichzeitig die Aktivierung des ersten Befehls sowie höchstens $h' - 1$ folgender auswählt und auslöst,

– wobei, um innerhalb der Spalten eine Funktionsweise mit Übertrag zu erhalten, die erste Einrichtung außerdem einen abgehenden Übertragskanal $R^+_K$ aufweist, der aus der Vorrichtung herausführt, wobei der Kanal aus der aktivierten Untermatrix dann, wenn die Nummer des ersten der aktivierten Befehle von Spalten größer oder gleich $K - h + 1$ ist, ein Signal, das anzeigt, ob ein Überlauf stattgefunden hat, an eine anderen Vorrichtung, die bezüglich der Spalten ähnlich ist, überträgt, und wobei die erste Einrichtung außerdem einen engehenden Übertragskanal $R^-_K$ aufweist, der vom Äußeren der Vorrichtung ein Signal empfängt, das anzeigt, ob von einer anderen ähnlichen Vorrichtung her ein Überlauf vorhanden ist, so daß das Signal mit dem ersten Signal so kombiniert wird, daß es ausgehend von dem ersten $S_0$ die genaue Anzahl der zu aktivierenden Befehle von Spalten anzeigt, und

– wobei, um innerhalb der Zeilen eine Funktionsweise mit Übertrag zu erhalten, die zweite Einrichtung außerdem einem abgehenden Übertragskanal $R^+_L$ aufweist, der aus der Vorrichtung herausführt, wobei der Kanal aus der aktivierten Untermatrix dann, wenn die Nummer des ersten der aktivierten Befehle von Zeilen größer oder gleich $L - h' + 1$ ist, ein Signal, das anzeigt, ob ein Überlauf stattgefunden hat, an eine andere Vorrichtung, die bezüglich der Zeilen ähnlich ist, überträgt, und wobei die zweite Einrichtung außerdem einen engehenden Übertragskanal $R^-_L$ aufweist, der vom Äußeren der Vorrichtung ein Signal empfängt, das anzeigt, ob von einer anderen ähnlichen Vorrichtung her ein Überlauf vorhanden ist, so daß das Signal mit dem zweiten Signal so kombiniert wird, daß es ausgehend von dem ersten $S'_0$ die genaue Anzahl der zu aktivierenden Befehle von Zeilen anzeigt.

2. Vorrichtung nach Anspruch 1, dadurch gekennzeichnet, daß der ersten Einrichtung eine kreisförmige Arbeitsweise zugrunde liegt, so daß in der Reihenfolge der Numerierung der Befehle von Spalten dem letzten Befehl $S_{K-1}$ der erste Befehl $S_0$ folgt und genau $h - 1$ Befehle von Spalten aktiviert werden.

3. Vorrichtung nach Anspruch 1, dadurch gekennzeichnet, daß der zweiten Einrichtung eine kreisförmige Arbeitsweise zugrunde liegt, so daß in der Reihenfolge der Numerierung der Befehle von Zeilen dem letzten Befehl $S'_{L-1}$ der erste Befehl $S'_0$ folgt und genau $h' - 1$ Befehle von Zeilen aktiviert werden.

4. Vorrichtung nach Anspruch 1, die am Eingang einen ersten Adreßdus $A^+A_{K-1} ..... A_{t-1} ..... A_0$ aufweist mit $h = 2^t$ und $K = 2^k$, wobei der erste Bus das erste Signal bereitstellt, sowie einen zweiten Adreßbus $A'^+A'_{L-1} ..... A'_{t-1} ..... A'_0$ mit $h' = 2^{t'}$ und $L = 2^l$, wobei der zweite Bus das zweite Signal bereitstellt, dadurch gekennzeichnet, daß

– der Kanal für den Übertrag am Eingang der ersten Einrichtung ein einfacher Binärkanal $R^-_K$ ist,
– der Kanal für den Übertrag am Eingang der zweiten Einrichtung ein einfacher Binärkanal $R^-_L$ ist,
– die erste Einrichtung folgendermaßen realisiert ist :

sie weist einen ersten Decoder auf, der aktiv ist, wenn $R^-_K$ das Überlaufsignal übermittelt, wobei der Decoder als Eingang die Kanäle $A_{t-1}, ..., A_0$ hat und als Ausgang $h$ Befehle, die als $R^-_{K-h} R^-_{K-h+1} ... R^-_{K-1}$ bezeichnet werden,

und sie weist einen zweiten Decoder auf, der aktiv ist, wenn $A^+ = 1$ ist, wobei der Decoder als Eingänge die Kanäle $A_{K-1} ... A_0$ hat und als Ausgänge $K$ Befehle, die mit $C_0, ... C_{K-1}$ bezeichnet werden,

und die Befehle zum Aktivieren der Spalten sint entsprechend der folgenden logischen Gleichungen fest

verdrahtet :

$S_j = C_{j-h+1} + ..... + C_j$, wobei j von h − 1 bis K − 1 einschließlich der Grenzen läuft,

$S_j = R^-_{K-h+j+1} + ..... + R^-_{K-1} + C_0 + ..... + C_j$, wobei j von 0 bis h − 2 einschließlich der Grenzen läuft,

— die zweite Einrichtung folgendermaßen aufgebaut ist :

sie weist einen ersten Decoder auf, der aktiv ist, wenn $R^-_L$ das Überlaufsignal übermittelt, wobei der Decoder als Eingänge die Kanäle $A'_{t-1}$, ..., $A'_0$ hat und als Ausgänge h′ Befehle, die mit $R^-_{L-h'}$, $R^-_{L-h'+1}$ ..... $R^-_{L-1}$ bezeichnet werden,

und sie weist einen zweiten Decoder auf, der aktiv ist, wenn $A'^+ = 1$ ist,

wobei der Decoder als Eingänge die Kanäle $A'_{L-1}$ ... $A'_0$ hat und als Ausgänge L Befehle, die mit $C'_0$, ..., $C'_{L-1}$ bezeichnet werden,

und die Befehle zum Aktivieren der Zeilen sind entsprechend der folgenden logischen Gleichungen fest verdrahtet :

$S'_i = C'_{i-h'+1} + ... + C'_i$, wobei i von h′ − 1 bis L − 1 einschließlich der Grenzen läuft,

$S'_i = R^-_{L-h'+i+1} + ... + R^-_{L-1} + C'_0 + ... + C'_i$, wobei i von 0 bis h′ − 2 einschließlich der Grenzen läuft,

— der Kanal für den Übertrag am Ausgang der ersten Einrichtung, $R^+_K$, ein einfacher Binärkanal ist, der den Ausgang einer Verdrahtung bildet, die die logische Gleichung

$$R^+_K = C_{K-h+1} + ... + C_{K-1} \text{ erfüllt,}$$

— der Kanal für den Übertrag am Ausgang der zweiten Einrichtung, $R^+_L$, ein einfacher Binärkanal ist, der den Ausgang einer Verdrahtung bildet, die die logische Gleichung

$$R^+_L = C'_{L-h'+1} + ... + C'_{L-1} \text{ erfüllt.}$$

5. Vorrichtung zum Aktivieren von bestimmten Befehlen aus einem matrixartig organisierten Satz von Befehlen in Abhängigkeit von einer Auswahlbedingung, um in der Matrix von K · L Befehlen die parallele und gleichzeitige Aktivierung einer Reihe von höchstens h Befehlen zu bewirken, und zwar für eine beliebige Anfangsposition der Abfolge, und derartig, daß die Reihenfolge der Befehle folgendermaßen erfolgt :

$S_{0,0}$, $S_{0,1}$, ... $S_{0,K-1}$, dann $S_{1,0}$, $S_{1,1}$ ... $S_{1,K-1}$ und schließlich bis $S_{L-1,0}$, ... $S_{L-1,K-1}$,

wobei h, K und L Ziffern sind, die die Gleichungen 4 $\leqq 2h$ $\leqq K$ und L $\leqq 2$ erfüllen, dadurch gekennzeichnet, daß sie aufweist :

— eine Anordnung von K · L UND-Gliedern die eine Verbindung zwischen K Befehlen $S_0$, ..., $S_{K-1}$ von Spalten mit 2 · L Befehlen $S'_0$, $S''_0$, ..., $S'_{L-1}$, $S''_{L-1}$ von Zeilenabschnitten gemäß den logischen Funktionen $S'_i$ UND $S_j$ bilden, wobei i zwischen 0 und L − 1 läuft und j von 0 bis d, Grenzen eingeschlossen sowie der logischen Funktionen $S''_i$ UND $S_j$, wobei i zwischen 0 und L − 1 läuft und j von d + 1 bis K − 1, Grenzen eingeschlossen, wobei d eine beleibige Ziffer zwischen h − 2 und K − h, Grenzen eingeschlossen, ist und wobei die Ausgänge der UND-Glieder dem matrixartig organisierten Satz von K · L Befehlen entsprechen,

— eine erste Einrichtung (1) zur Aktivierung von Befehlen von Spalten (7), die, wenn sie ein erstes Signal empfängt, das die Erfüllung eines Teils der Auswahlbedingung anzeigt, wobei das Signal den ersten der zu aktivierenden Befehle von Spalten bestimmt, parallel die gleichzeitige Aktivierung des ersten Befehls und der h − 1 folgenden Befehle auswählt und auslöst, wobei der ersten Einrichtung eine kreisförmige Arbeitsweise zugrunde liegt, so daß in der Folge der Befehle der Spalten $S_0$, ..., $S_{K-1}$, dem letzten $S_{K-1}$ der erste $S_0$ folgt,

— eine zweite Einrichtung (2) zur Aktivierung von Befehlen von Zeilenbereichen (3, 4), die, wenn sie einerseits ein zweites Signal zum gleichen Zeitpunkt, zu dem die erste Einrichtung ihr Signal empfängt, ein Signal empfängt, wobei das zweite Signal ein Paar von Abschnitten von Zeilen desselben Ranges i bezeichnet, und andererseits ein drittes Signal empfängt, das anzeigt, ob der erste der Befehle von Spalten, die durch die erste Einrichtung aktiviert werden sollen, entweder von Range j kleiner oder gleich d ist oder im Gegensatz dazu von Range j größer als d ist, parallel die gleichzeitige Aktivierung der zwei Befehle von Zeilenbereichen von Rang i, $S'_i$ und $S''_i$, auswählt und auslöst, wenn der Rang j kleiner oder gleich d ist und die anderenfalls parallel die gleichzeitige Aktivierung der zwei Befehle von Zeilenbereichen $S''_i$ und $S'_{i+1}$ auswählt und auslöst.

6. Vorrichtung nach Anspruch 5, dadurch gekennzeichnet, daß zur Durchführung einer Arbeitsweise mit Übertrag die zweite Einrichtung außerdem einen Ausgang für den Übertrag $R^+$ aufweist, der aus der Vorrichtung herausführt, der aktiviert ist, wenn der erste der aktivierten Befehle von Zeilenbereichen $S''_{L-1}$ ist, und daß die zweite Einrichtung außerdem einen Eingang für den Übertrag $R^-$ aufweist, der von außerhalb der Vorrichtung her ein Signal empfängt, das anzeigt, ob der einzige zu aktivierende Befehl vom Zeilenbereich $S'_0$ ist.

7. Vorrichtung nach Anspruch 5 oder 6, dadurch gekennzeichnet, daß die Zahl d zu K/2 gewählt wird.

8. Vorrichtung nach Anspruch 6 und 7 mit

– einem ersten Adreßbus $A_{K-1}$ ..... $A_0$ mit $2^k = K$, wobei der erste Bus das erste Signal liefert, und mit

– einem zweiten Adreßbus $A^+A'_{l-1}$ ..... $A'_0$ mit $2^l = L$, wobei der zweite Bus das zweite Signal liefert, dadurch gekennzeichnet, daß :

– das dritte Signal lediglich mittels des Kanals $A_{K-1}$ übermittelt wird,

– die erste Einrichtung dadurch gebildet wird :

sie weist einen ständig aktiven Decoder auf, dessen k Eingänge die Kanäle des ersten Busses sind und dessen K Ausgänge mit $C_0$ ..... $C_{K-1}$ bezeichnet werden,

und sie weist eine Verdrahtung auf, deren Ausgänge die Befehle zum Aktivieren der Spalten (7) gemäß der folgenden logischen Gleichungen bilden :

$S_i = C_{i-h+1} ... + C_i$, wobei i von h – 1 bis K – 1 einschließlich der Grenzen läuft,

$S_i = C_{K-h+i-1} + ..... + C_{K-1} + C_0 + ..... + C_i$, wobei i zwischen 0 und h – 2 einschließlich der Grenzen läuft,

– die zweite Einrichtung gebildet wird durch :

sie weist einen Decoder auf, der aktiv ist, wenn $A^+ = 1$ ist, dessen l + 1 Eingänge die Kanäle $A'_{l-1}$ ..... $A'_0$ des zweiten Busses sind sowie $A_{K-1}$, und wobei die $2 \cdot L$ Ausgänge mit $C'_0$, $C''_0$, ..... $C'_{L-1}$, $C''_{L-1}$, bezeichnet werden, und

sie weist eine Verdrahtung auf, deren Ausgänge die Befehle zur Aktivierung der Bereiche der Zeilen (3, 4) entspreder folgenden logischen Gleichungen bilden :

$S'_0 = R^- + C'_0$     $S'_i = C''_{i-1} + C'_i$, wobei i von 1 bis L   1 ensichließlich der Grenzen läuft,

$S''_i = C'_i + C''_i$, wobei i zwischen 0 und L – 1 einschließlich der Grenzen läuft, und wobei $R^+ = C''_{L-1}$ gilt.

9. Vorrichtung nach einem der vorhergegangenen Ansprüche, dadurch gekennzeichnet, daß

zur parallelen Auswahl mehrerer Speicherzellen unter $K \cdot L$ matrixartig angeordneten Speicherzellen der Satz von zur Aktivierung durch die Vorrichtung vorgesehenen Befehlen einem Satz von Befehlen zur Auswahl von Speicherzellen in der matrixartigen Anordnung der Speicherzellen entspricht.

10. Vorrichtung nach Anspruch 8 und 9, dadurch gekennzeichnet, daß sie außerderm aufweist :

– einen mit $D_{h-1}, ... D_0$ bezeichneten Datenbus, der mit den Speicherzellen so verbunden ist, daß die von $S_{i,j}$ bestimmte Zelle mit $D_{h-1-v}$ verbunden ist, wobei v = (j modulo h) gilt,

– einen kreisförmigen Vertauscher Perm(h), der sich beim Datenbus befindet, dessen h Eingänge mit e(j) bezeichnet werden, wobei j von 0 bis h – 1 einschließlich der Grenzen läuft, und dessen Ausgänge s(j), der h mit $q_0 ... q_{h-1}$ bezeichnete Befehle besitzt, und der zur Aktivierung des Befehls $q_i$ die folgende vertauschung realisiert :

$$\begin{bmatrix} e\ (h-i-1) & e\ (h-i-2)... & e\ (0) & e\ (h-1)... & e\ (h-i) \\ s\ (h-1) & s\ (h-2) & ... \ s\ (i) & s(i-1)\ ... & s\ (0) \end{bmatrix},$$

wobei der vom Speicher ausgehende Datenbus an die Eingänge von Perm(h) entsprechen $D_v$, e(v) gelegt wird, und wobei die Ausgänge von Perm(h) mit dem Datenbus, der aus der Vorrichtung herausführt, entsprechend s(v), $D_v$ verbunden werden.

11. Vorrichtung nach Ansprüchen 4 und 9, dadurch gekennzeichnet, daß sie außerdem aufweist :

– einen mit $D_{u,v}$ bezeichneten Datenbus (u läuft von 0 bis h' – 1 und v von 0 bis h – 1 einschließlich der Grenzen), der folgendermaßen mit Speicherzellen verbunden ist :

die von $S_{i,j}$ bestimmte Zelle ist mit $D_{h'-1-u,h-1-v}$ verbunden, mit u = (i modulo h')· und v = (j modulo h),

– eine Vorrichtung Perm(h, h') befindet sich am Datenbus, wobei die Vorrichtung h + h' mit $q_0 ... q_{h-1} q'_0 ...$ $q'_{h'-1}$ bezeichnete befehle umfaßt sowie hh' mit e(u, v) bezeichnete Eingangskanäle, wobei u zwischen 0 und h' – 1 und v zwischen 0 und h – 1 einschließlich der Grenzen läuft, sowie hh' Ausgangskanäle s(u, v), so daß jede der h' Anordnungen von Kanälen e(u, h – 1),... e(u, 0), wobei u von 0 bis h' – 1 einschließlich der Grenzen läuft, auf eine Vorrichtung Perm(h) trifft, dessen Ausgänge mit $I_{u,h-1}, ... I_{u,0}$ bezeichnet werden und die für einen Befehl $q_j$, wobei j von 0 bis h – 1 einschließlich der Grenzen läuft, die folgende Vertauschung durchführt :

$$\begin{bmatrix} e\ (u,\ h-j-1)... & e\ (u,\ 0) & e\ (u,\ h-1) & e\ (u,\ h-j) \\ I_{u,h-1} & & & I_{u,0} \end{bmatrix},$$

die h Zeilen der Befehle der h' Vorrichtungen sind dieselben für jeden, jede der h Anordnungen von Kanälen $I_{h'-1,v} ... I_{0,v}$, wobei v von 0 bis h − 1 einschließlich der Grenzen läuft trifft auf eine Vorrichtung Perm(h'), dessen Ausgänge mit s(h' − 1, v) ... s(o, v) bezeichnet werden und die für einen Befehl $q'_i$, wobei i von 0 bis h' − 1 einschließlich der Grenzen läuft, die folgende Vertauschung durchführt :

$$\left( \begin{array}{cccc} I_{h'-i-1,v} & \cdots & I_{0,v} & I_{h'-1,v} & \cdots & I_{h'-i,v} \\ s\ (h'-1,v) & & & & & s\ (0,\ v) \end{array} \right)\ ,$$

wobei die h' Zeilen der Befehle der h Vorrichtungen dieselben für jeden sind,

der vom Speicher kommende Datenbus trifft auf die Vorrichtung Perm(h, h'), so daß $D_{u,v}$ e(u, v) entspricht, und die Ausgänge von Perm(h, h') sind mit dem zum Äußeren des Systems laufenden Datenbus verbunden, so daß s(u, v) $D_{u,v}$ entspricht.

## Claims

1. A device for activating a certain number of commands, responsive to a selection condition, taken from a set of commands organized in a matrix, in order to activate a submatrix of not more than h · h' commands simultaneously and in parallel from within the matrix of K · L commands and regardless of the position of the submatrix therein, where h, h', K and L are numbers such that $4 \leqq 2h \leqq K$ and $4 \leqq 2h' \leqq L$, characterized in that it comprises :

a set of K · L AND gates interconnecting K column commands ordered from 0 to K − 1 and referenced $S_0$, ..., $S_j$, ..., $S_{K-1}$, and L line commands ordered from 0 to L − 1 and referenced $S'_0$, ..., $S'_i$, ..., $S'_{L-1}$ in accordance with logic functions $S'_i$ AND $S_j$, with the outputs of said gates corresponding biuniquely to the set of K · L matrix-organized commands ;

first activation means for the columns commands, which first activation means select and simultaneously activate in parallel a first column command and the following not more than h − 1 column commands on receiving a first signal representative of a portion of the selection condition and designating said first column command to be activated ; and

second activation means for the line commands, which second activation means select and simultaneously activate in parallel a first line command and the following not more than h' − 1 line commands on receiving a second signal representative of another portion of the selection condition and designating said first line command to be activated, said second signal being received at the same time as the first means receives its signal,

whereas, in order to enable a mode of operation with column carry, the first means further include a carry-out channel $R^+_K$, for connection outside the device, said channel transmitting an overflow-indicating signal from the activated submatrix towards another similar device in the column direction whenever the number of the first activated column command is greater than or equal to K − h + 1 ; said first means further including a carry-in channel $R^-_K$, for receiving a signal from outside the device indicative of overflow from another similar device, said signal then being combined with the first signal so as to give the exact number of column commands to be activated, starting with the first $S_0$,

and whereas, in order to enable a mode of operation with line carry, the second means further include a carry-out channel $R^+_L$, for connection outside the device, said channel transmitting an overflow-indicating signal from the activated submatrix towards another similar device in the line direction whenever the number of the first activated line command is greater than or equal to L − h' + 1 ; said second means further including a carry-in channel $R^-_L$, for receiving a signal from outside the device indicative of overflow from another similar device, said signal then being combined with the second signal so as to give the exact number of line commands to be activated, starting with the first $S'_0$.

2. A device according to claim 1, characterized in that the first means operate in a circular mode such that, in column command numbering order, the last column command $S_{K-1}$ is followed by the first column command $S_0$, and exactly h − 1 column commands are activated.

3. A device according to claim 1, characterized in that the second means operate in a circular mode such that, in line command numbering order, the last line command $S'_{L-1}$ is followed by the first line command $S'_0$, and exactly h' − 1 line commands are activated.

4. A device according to claim 1, comprising a first inputaddress bus $A^+A_{k-1} ... A_{t-1} ... A_0$, where $h = 2^t$ and $K = 2^k$, said first bus delivering the first signal, and a second address bus $A'^+A'_{l-1} ... A'_{t-1} ... A'_0$, where h'

$= 2^r$ and $L = 2^l$, said second bus delivering the second signal, characterized in that

the carry-in channel of the first means is a simple binary channel $R^-_K$ ;

the carry-in channel of the second means is a simple binary channel $R^-_L$ ;

the first means is implemented as follows :

it includes a first decoder which is activated when $R^-_K$ transmits the overflow signal, said decoder having the channels $A_{t-1}, ..., A_0$ as inputs and having h commands referenced $R^-_{K-h}, R^-_{K-h+1}, ... R^-_{K-1}$ as outputs ; and

it includes a second decoder which is activated when $A^+ = 1$, said decoder having the channels $A_{k-1} ..., A_0$ as inputs and having K commands referenced $C_0, ..., C_{K-1}$ as outputs ;

with the column activation commands being wired in accordance with the following logic equations :

$S_j = C_{j-h+1} + ... + C_j$ for j varying from $h - 1$ to $K - 1$ (end values included) ; and

$S_j = R^-_{K-h+j+1} + ... + R^-_{K-1} + C_0 + ... + C_j$ for j varying from 0 to $h - 2$ (end values included) ;

the second means is implemented as follows :

it includes a first decoder which is activated when $R^-_L$ transmits the overflow signal, said decoder having the channels $A'_{t-1}, ..., A'_0$ as inputs and having h' commands referenced $R^-_{L-h'}, R^-_{L-h'+1}, ... R^-_{L-1}$ as outputs ; and

it includes a second decoder which is activated when $A'^+ = 1$,

said decoder having the channels $A'_{l-1} ..., A'_0$ as inputs and having L commands referenced $C'_0, ..., C'_{L-1}$ as outputs ;

with the line activation commands being wired in accordance with the following logic equations :

$S'_i = C'_{i-h'+1} + ... + C'_i$ for i varying from $h' - 1$ to $L - 1$ (end values included) ; and

$S'_i = R^-_{L-h'+i+1} + ... + R^-_{L-1} + C'_0 + ... + C'_i$ for i varying form 0 to $h' - 2$ (end values included) ;

the carry-out channel $R^+_K$ from the first means is a simple binary channel constituting the output from wiring satisfying the following logic equation :

$$R^+_K = C_{K-h+1} + ... + C_{K-1} ; \text{ and}$$

the carry-out channel $R^+_L$ from the second means is a simple binary channel constituting the output from wiring satisfying the following logic equation :

$$R^+_L = C'_{L-h'+1} + ... + C'_{L-1}.$$

5. A device for activating a certain number of commands taken as function of selection conditions from a set of commands organized in a matrix, in order to activate a train of not more than h commands simultaneously and in parallel from within the matrix of $K \cdot L$ commands, regardless of the position of the origin of the train therein, and so that the commands are in the following order :

$S_{0,0}, S_{0,1} ... S_{0,K-1}$, then $S_{1,0}, S_{1,1} ... S_{1,K-1}$ and so on up to $S_{L-1,0}, ... S_{L-1,K-1}$,

where h, K and L are numbers such that $4 \leqq 2h \leqq K$ and $L \geqq 2$, characterized in that it comprises

a set of $K \cdot L$ AND gates interconnecting K column commands reference $S_0, ..., S_{K-1}$ with $2 \cdot L$ line portion commands referenced $S'_0, S''_0, ..., S'_{L-1}1, S''_{L-1}$ in accordance with logic functions $S'_i$ AND $S_j$ for i varying from 0 to $L - 1$ and j varying from 0 to d (end values included)

and with logic functions $S''_i$ AND $S_j$ for i varying from 0 to $L - 1$ and j varying from $d + 1$ to $K - h$ (end values included)

where d is any number selected between $h - 2$ and $K - h$ (end values included), and the outputs from said gates correspond to the set of $K \cdot L$ matrix-organized commands ;

first activation means (1) for the column commands (7), which first activation means select and simultaneously activate in parallel a first column command and the following $h - 1$ column commands on receiving a first signal representative of the realization of a portion of the selection condition and designating said first column command to be activated, said first means operating in a circular mode so that, in the sequence of column commands $S_0, ..., S_{K-1}$, the last $S_{K-1}$ is followed by the first $S_0$ ; and

second activation means (2) for the line portion commands (3, 4), which second activation means select and simultaneously activate in parallel two line portion commands $S'_i$ and $S''_i$ of rank i when the rank j is less than or equal to d, and otherwise select and simultaneously activate in parallel two line portion commands $S''_i$ and $S'_{i+1}$, on receiving firstly a second signal designating a pair of line portions of the same rank i, said second signal being received at the same time as the first means receives its signal, and secondly a third signal indicating whether the first of the column commands to be activated by the first means is of rank j less than or equal to d, or on the contrary is of rank j greater than d.

6. A device according to claim 5, characterized in that, in order to enable a mode of operation with carry :

the second means further includes a carry output $R^+$ for connection outside the device, which output is activated when the first of the activated line portion commands is $S''_{L-1}$ ; and

the second means further includes a carry input R⁻ for receiving a signal from outside the device indicative of whether the sole line portion command to be activated is S′₀.

7. A device according to claim 5 or 6, characterized in that the number d is selected to be equal to K/2.

8. A device according to claims 6 and 7,

comprising a first address bus $A_{k-1}$ ... $A_0$ where $2^k = K$, said first bus delivering the first signal, and comprising a second address bus $A^+A′_{l-1}$ ... $A′_0$ where $2^l = L$,

said second bus delivering the second signal ; characterized in that :

the third signal is transmitted solely by means of the channel $A_{k-1}$ ;

the first means is implemented as follows :

it includes a continuously activated decoder having k inputs constituted by the channels of the first bus, and K outputs referenced $C_0$ ... $C_{K-1}$ ; and

it includes wiring whose outputs form the activation commands for the columns (7) in accordance with the following logic equations :

$S_i = C_{i-h+1}$ .... $+ C_i$ for i varying from h − 1 to K − 1 (end values included), and

$S_i = C_{K-h+i+1} + ... + C_{K-1} + C_0 + ... + C_i$ for i varying from 0 to h − 2 (end values included) ; and

the second means is implemented as follows :

it includes a decoder which is activated when $A^+ = 1$, having l + 1 inputs constituted by the channels $A′_{l-1}$..., $A′_0$ of the second bus together with $A_{k-1}$, and 2L outputs referenced $C′_0$, $C″_0$, ... $C′_{L-1}$, $C″_{L-1}$ ; and

it includes wiring whose outputs form the activation commands for the line portions (3, 4) in accordance with the following logic equations :

$S′_i = R^- + C′_0 S′_i = C″_{i+1} + C′_i$ for i varying from 1 to L − 1 (end values included), and

$S″_i = C′_i + C″_i$ for i varying from 0 to L − 1 (end values included), and $R^+ = C″_{L-1}$.

9. A device according to any preceding claim, characterized in that :

in order to select a plurality of memory cells in parallel from $K \cdot L$ memory cells disposed in a matrix network, the set of commands capable of being activated by the device corresponds to the set of commands for selecting memory cells in the matrix network of said cells.

10. A device according to claims 8 and 9, characterized in that, in addition, it includes :

a data bus references $D_{h-1}$, ... $D_0$ which is connected to the memory cells as follows : the cell under the command of $S_{i,j}$ is connected to $D_{h-1-v}$, where v = (j modulo h) ;

and circular permutation means Perm(h) placed on the data bus, said means having h inputs referenced e(j) with j varying over the range 0 to h − 1 (end values included), having outputs s(j), and having h commands referenced $q_0$ ... $q_{h-1}$, and, for the activation of the command $q_i$, performing the following permutation :

$$\begin{bmatrix} e(h-i-1) & e(h-i-2) & ... & e(0) & e(h-1) & ... & e(h-i) \\ s(h-1) & s(h-2) & ... & s(i) & s(i-1) & ... & s(0) \end{bmatrix} \, ,$$

the data bus coming from the memory being applied to the inputs of Perm(h) by making $D_v$ and e(v) correspond, and the outputs from Perm(h) being connected to the data bus for connection to the outside, making s(v) correspond with $D_v$.

11. A device according to claims 4 and 9, characterized in that it further includes :

a data bus referenced $D_{u,v}$ where u varies from 0 to h′ − 1 and v varies from 0 to h − 1 (end values included), which bus is connected to the memory cells as follows :

the cell under the command of $S_{i,j}$ is connected to $D_{h′-1-u,h-1-v}$ where u = (i modulo h′) and v = (j modulo h),

a device Perm(h, h′) is placed on the data bus, said device having h + h′ commands referenced $q_0$ ... $q_{h-1}$ $q′_0$ ... $q′_{h′-1}$ and hh′ input channels referenced e(u, v), where u varies from 0 to h′ − 1 and v varies from 0 to h − 1 (end values included), and hh′ output channels s(u, v), and is such that each of the h′ sets of channels e(u, h − 1), ... e(u, 0) for u varying from 0 to h′ − 1 (end values included) is applied to a device Perm(h) having outputs referenced $I_{u,h-1}$, ... $I_{u,0}$ and which performs the following permutation for its commands $q_j$ where j varies from 0 to h − 1 (end values included) :

$$\begin{bmatrix} e(u,h-j-1) & ... & e(u,0) & e-(u,h-1) & e(u,h-j) \\ I_{u,h-1} & & & & I_{u,0} \end{bmatrix} \, ,$$

with h command lines of these h′ devices being the same in each of them, with each of the h sets of channels $I_{h'-1,v}$ ... $I_{0,v}$ for v varying from 0 to h − 1 (end values included) being applied to a device Perm(h′) whose outputs are s(h′ − 1, v) ... s(0, v) and which performs the following permutation for it : commands $q'_i$ where i varies from 0 to h′ − 1 (end values included) :

$$\begin{bmatrix} I_{h'-i-1,v} & \cdots & I_{0,v} & I_{h'-1,v} & \cdots & I_{h'-i,v} \\ s(h'-1,v) & & & & & s(0,v) \end{bmatrix}$$

with the h′ command lines of these h devices being the same in each of them ; and

the data bus coming from the memory is applied to a device Perm(h, h′) such that $D_{u,v}$ corresponds to e(u, v), and the output from Perm(h, h′) are connected to the data bus for connection to the outside of the system such that s(u, v) corresponds to $D_{u,v}$.

EP 0 205 523 B1

FIG.1

FIG.2

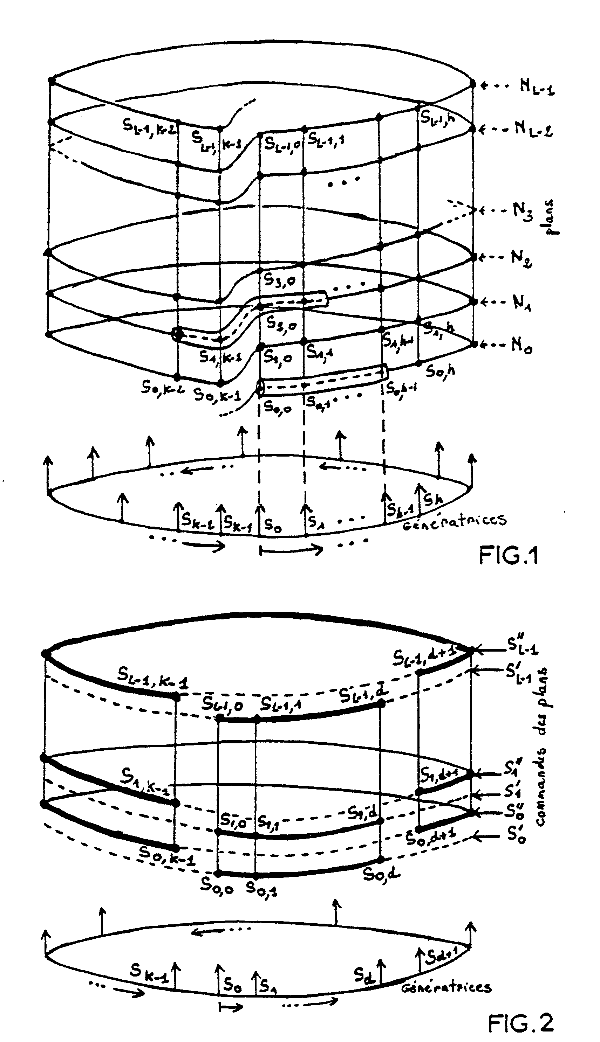

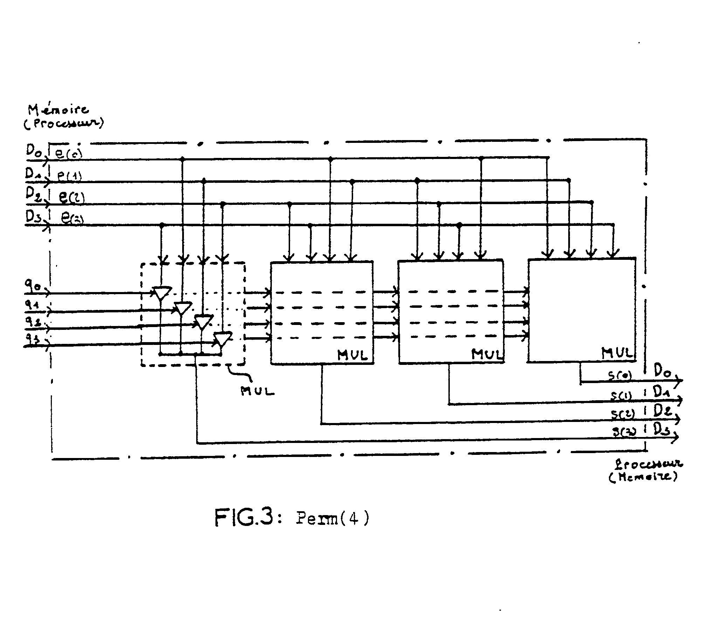

FIG.3: Perm(4)

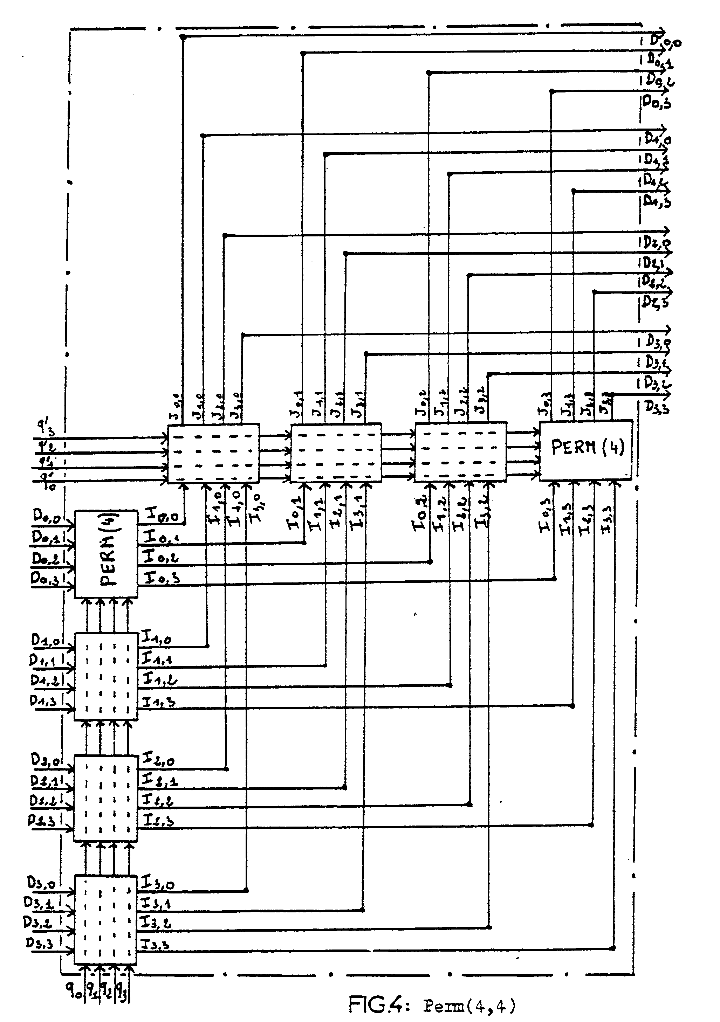

FIG.4: Perm(4,4)

FIG.5 : Dispositif DChN(a)1

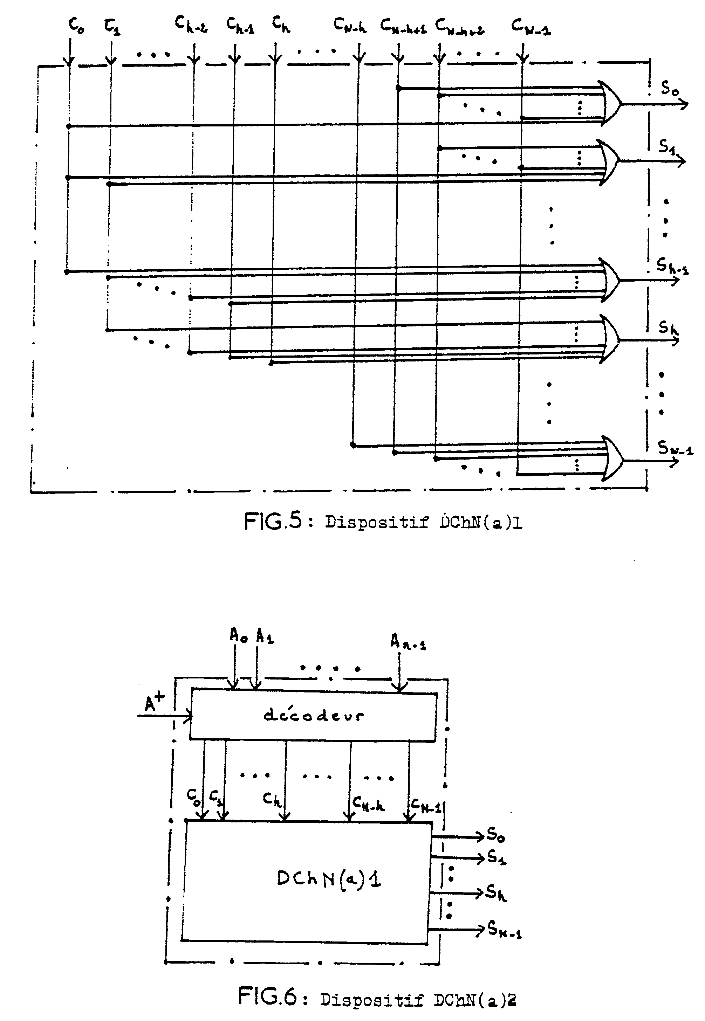

FIG.6 : Dispositif DChN(a)2

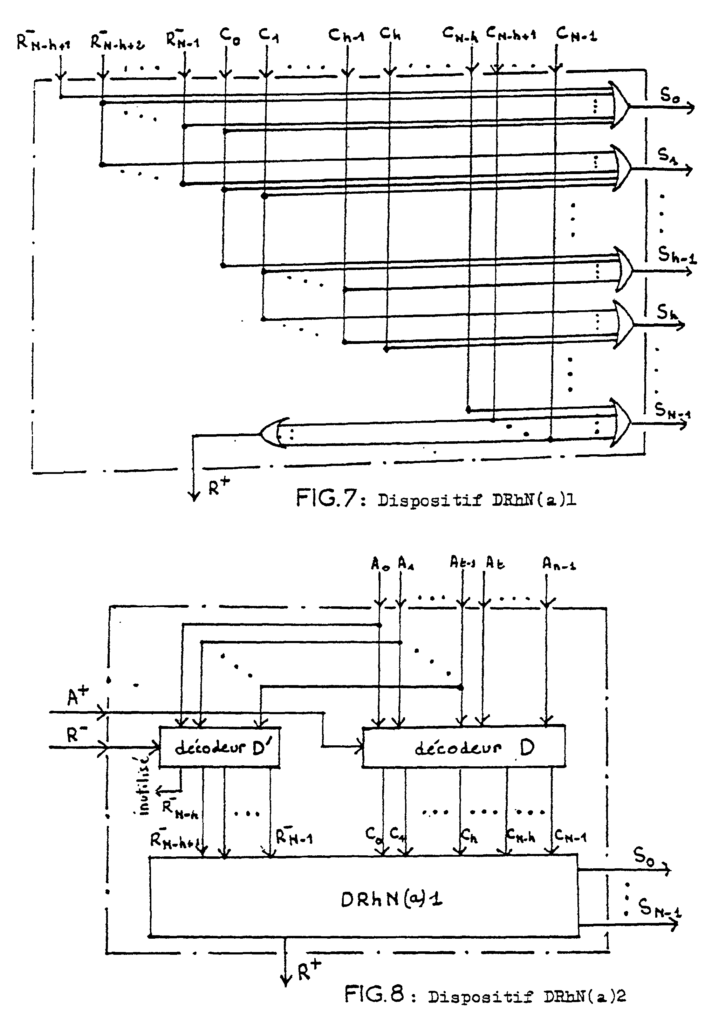

FIG.7: Dispositif DRhN(a)1

FIG.8 : Dispositif DRhN(a)2

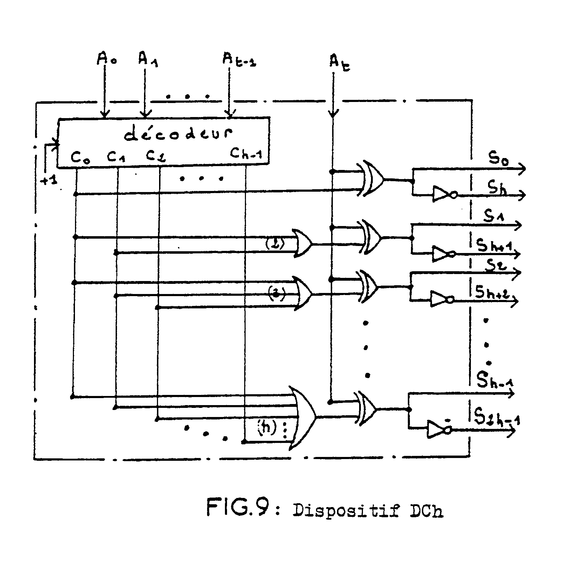

FIG.9 : Dispositif DCh

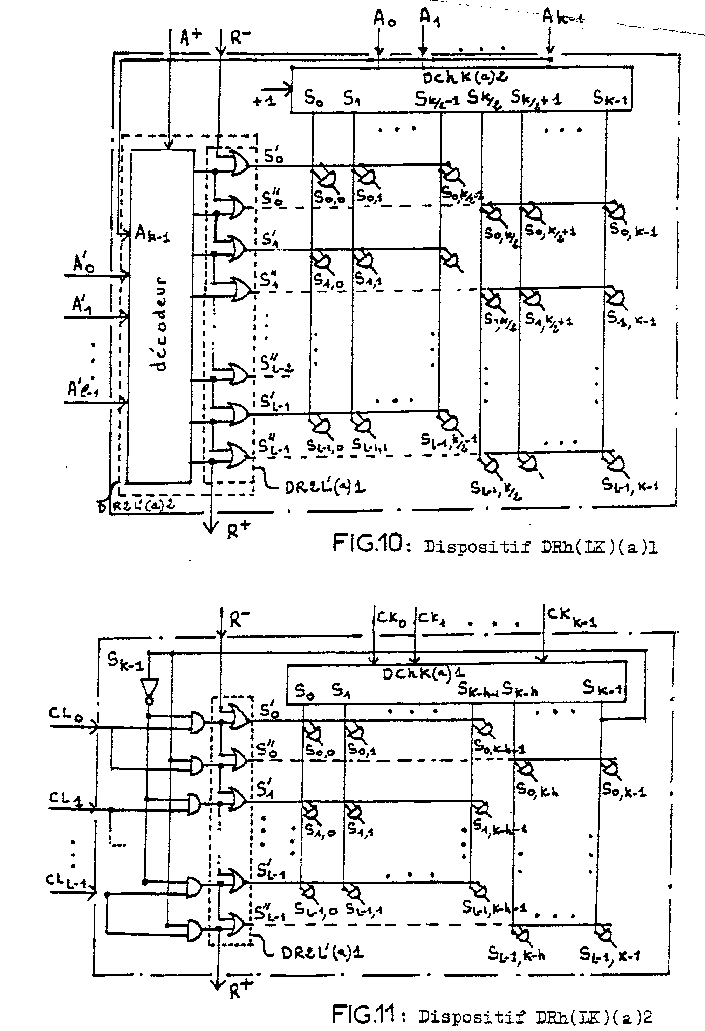

FIG.10 : Dispositif DRh(LK)(a)1

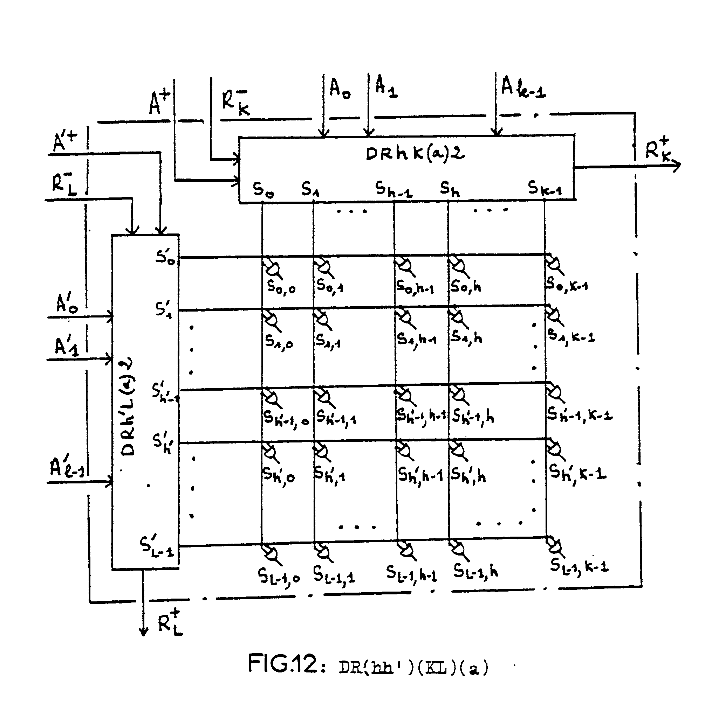

FIG.11 : Dispositif DRh(LK)(a)2

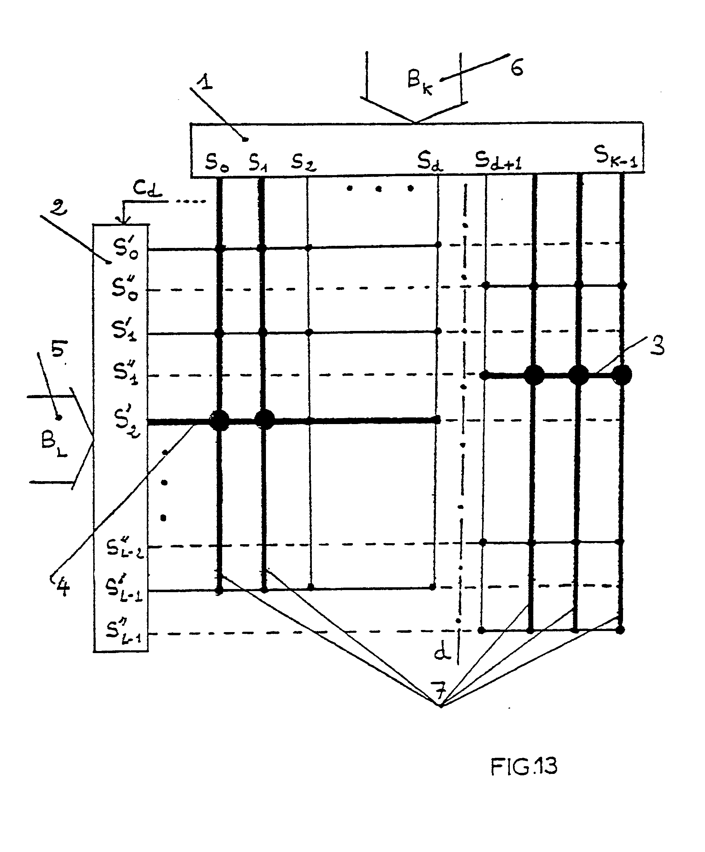

FIG.12: DR(hh')(KL)(a)

FIG.13